(19) Europäisches Patentamt
European Patent Office
Office européen des brevets

(11) EP 4 315 528 B1

(12) FASCICULE DE BREVET EUROPEEN

(45) Date de publication et mention de la délivrance du brevet:
**26.03.2025 Bulletin 2025/13**

(21) Numéro de dépôt: **22719299.4**

(22) Date de dépôt: **01.04.2022**

(51) Classification Internationale des Brevets (IPC):
***H01S 3/00** (2006.01)* ***H01S 3/139** (2006.01)*

(52) Classification Coopérative des Brevets (CPC):
**H01S 3/0057; H01S 3/0085; H01S 3/1392**

(86) Numéro de dépôt international:
**PCT/EP2022/058753**

(87) Numéro de publication internationale:
**WO 2022/207905 (06.10.2022 Gazette 2022/40)**

# (54) METHODE D'ASSERVISSEMENT D'UN DISPOSITIF OPTIQUE COMPRENANT UN LASER ET UNE CAVITE PERMETTANT DE COMPENSER UNE MODULATION D'AMPLITUDE INTRODUITE PAR UN MODULATEUR DE PHASE

VERFAHREN ZUR SERVOSTEUERUNG EINER OPTISCHEN VORRICHTUNG MIT LASER UND RESONATOR ZUR KOMPENSATION EINER DURCH EINEN PHASENMODULATOR EINGEFÜHRTEN AMPLITUDENMODULATION

METHOD FOR SERVOCONTROLLING AN OPTICAL DEVICE COMPRISING A LASER AND A CAVITY, MAKING IT POSSIBLE TO COMPENSATE FOR AN AMPLITUDE MODULATION INTRODUCED BY A PHASE MODULATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2021 FR 2103389**

(43) Date de publication de la demande:
**07.02.2024 Bulletin 2024/06**

(73) Titulaires:
- **THALES**
  **92190 Meudon (FR)**
- **Ecole Normale Supérieure Paris-Saclay**
  **91190 Gif-sur-Yvette (FR)**
- **CENTRE NATIONAL DE LA RECHERCHE SCIENTIFIQUE**
  **75016 Paris (FR)**

(72) Inventeurs:
- **FEUGNET, Gilles**
  **91767 Palaiseau (FR)**
- **DESCAMPEAUX, Maxime**
  **26027 Valence (FR)**
- **BRETENAKER, Fabien**
  **78140 Vélizy-Villacoublay (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**US-A- 5 068 864**

- **JIN LI ED - ASARI VIJAYAN K ET AL: "Suppression of residual amplitude modulation of ADP electro-optical modulator in Pound-Drever-Hall laser frequency stabilization", OPTICS AND LASER TECHNOLOGY, ELSEVIER SCIENCE PUBLISHERS BV., AMSTERDAM, NL, vol. 136, 4 December 2020 (2020-12-04), XP086431766, ISSN: 0030-3992, [retrieved on 20201204], DOI: 10.1016/J.OPTLASTEC.2020.106758**
- **XIAOHUI SHI ET AL: "Suppression of residual amplitude modulation effect in the Pound-Drever-Hall locking", ARXIV.ORG, CORNELL UNIVERSITY LIBRARY, 201 OLIN LIBRARY CORNELL UNIVERSITY ITHACA, NY 14853, 24 October 2017 (2017-10-24), XP081283734, DOI: 10.1007/S00340-018-7021-Y**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



(Cont. page suivante)

- YU YINAN ET AL: "Active cancellation of residual amplitude modulation in a frequency-modulation based Fabry-Perot interferometer", REVIEW OF SCIENTIFIC INSTRUMENTS, AMERICAN INSTITUTE OF PHYSICS, 2 HUNTINGTON QUADRANGLE, MELVILLE, NY 11747, vol. 87, no. 3, 2016, XP012205793, ISSN: 0034-6748, [retrieved on 19010101], DOI: 10.1063/1.4942594
- HALL JOHN L ET AL: "Accurate removal of RAM from FM laser beams", 2015 JOINT CONFERENCE OF THE IEEE INTERNATIONAL FREQUENCY CONTROL SYMPOSIUM & THE EUROPEAN FREQUENCY AND TIME FORUM, IEEE, 12 April 2015 (2015-04-12), pages 713 - 716, XP033168192, DOI: 10.1109/FCS.2015.7138941

## Description

### Domaine technique :

L'invention relève du domaine de l'asservissement de la fréquence optique laser sur une cavité optique résonante ou inversement.

### Technique antérieure :

Dans de nombreuses applications (gyromètre, interférométrie gravitationnelle ou encore métrologie), il est nécessaire d'avoir une source laser émettant un rayonnement à une fréquence optique très stable. Afin d'améliorer la stabilité de la fréquence optique d'un laser il est connu de réaliser un asservissement du laser sur la résonance d'une cavité optique résonante.

La méthode la plus couramment utilisée pour réaliser un tel asservissement est celle dite de Pound Drever Hall, du nom de ses inventeurs (voir R. W. P. Drever, Laser Phase and Frequency Stabilization Using an Optical Resonator, Appl. Phys. B 31, 97-105, 1983). La figure 1 représente schématiquement un dispositif permettant de réaliser cette méthode. Le dispositif comprend notamment une cavité C présentant une résonance autour d'une fréquence centrale $f_c$ et un laser L adapté pour un générer un faisceau laser LL. La fréquence optique du faisceau laser est ensuite décalée par un modulateur acousto-optique AOM (composant optionnel) à une fréquence $f = \omega/2\pi$ comprise dans ladite résonance. Le faisceau laser est alors modulé, par un modulateur de phase PM, par une phase à une fréquence de modulation $f_{mod} = \omega_{mod}/2\pi$ et une amplitude de modulation M. La fréquence de modulation est appliquée par un oscillateur local OL.

Par un développement en harmoniques, on peut montrer que le faisceau modulé en phase injecté dans la cavité présente une amplitude $E_{inj}$ telle que :

$$E_{inj} = J_0(M)e^{i\omega t} + J_1(M)e^{i(\omega+\omega_{mod})t} - J_1(M)e^{i(\omega-\omega_{mod})t} ,$$

avec $J$ des fonctions de Bessel, cette équation étant valable pour des faibles M en limitant le développement aux premiers bandes latérales.

Cette équation permet d'observer que le modulateur de phase PM créé des composantes latérales, « side-bands », en fréquence séparées de la fréquence initiale $f$ par des multiples de la fréquence de modulation, $f_{mod}$, appliquée par l'oscillateur OL via PM. Cette fréquence de modulation est choisie, si possible, pour être plus grande que la largeur de la résonnance de la cavité de manière à ce que les bandes latérales ne soient pas à résonance avec la cavité. Dans la suite on ne considère que les deux sidebands à $f \pm f_{mod}$.

Le faisceau laser est ensuite injecté dans la cavité C. Cette dernière possède une fonction de transfert en réflexion notée $F_r$ qui relie l'amplitude du champ électrique incident et celle du champ électrique réfléchi. Un circulateur optique CO (typiquement basé sur un rotateur de faraday placé entre deux cube séparateurs de polarisation) dirige le faisceau laser réfléchi par la cavité sur une photodiode notée PDr. Le signal SI généré par la photodiode est alors démodulé par un système de démodulation $Dem_0$ comprenant un mélangeur $Mix_0$ multipliant le signal SI par le signal de modulation appliqué à PM avec une phase de démodulation. Un filtre passe bas $LP_0$ permet alors de ne garder que la composante continue du signal démodulé dont l'amplitude, $V\varepsilon$, dit signal d'erreur est alors proportionnelle à l'écart entre la fréquence f du laser et la fréquence $f_c$ de résonance de la cavité. En effet, l'amplitude du signal d'erreur est :

$$V\epsilon = 2G\sqrt{P_cP_s}Im[F_r(\omega).\overline{F_r(\omega+\omega_{mod})} - \overline{F_r(\omega)}.F_r(\omega+\omega_{mod})],$$

avec $P_c$ et $P_s$ la puissance de la composante fondamentale et sideband respectivement et G le gain de conversion entre la puissance optique reçue et la tension délivrée par la photodiode

Lorsque la fréquence de modulation est suffisamment élevée et lorsque un écart $\delta v$ entre fréquence du rayonnement laser et la fréquence centrale de la résonance est suffisamment faible, alors on peut montrer que :

$$: V\epsilon = G\frac{8\sqrt{P_cP_s}}{\Delta f_c}\delta\nu$$

, avec $\Delta f_c$, la largeur de raie de la résonance (pour une cavité Fabry-Pérot de haute finesse).

Lorsque la fréquence $f$ du laser et la fréquence de résonance de la cavité s'écartent un peu, les deux side-bands sont inchangées (si elles sont bien hors résonnances) alors que la phase et l'amplitude du faisceau à la fréquence $f$ évoluent (puisqu'il n'est plus à résonance). Les propriétés de cohérence entre les trois composantes spectrales du faisceau laser permettent alors une mesure de ces fluctuations qui se traduisent par cette variation linéaire du signal démodulé qui peut être ainsi utilisé en tant que signal d'erreur fréquentielle, $V\varepsilon$ s'annulant lorsque le rayonnement laser est résonnant avec un mode de la cavité.

Un processeur UT est alors configuré pour réaliser un asservissement avec ce signal d'erreur $V\varepsilon$, via une électronique de rétroaction, selon les procédés classiques d'asservissement, par exemple, sans être restrictif, avec une électronique de rétroaction PI ou PID pour Proportionnelle Intégrale Dérivée, allusion aux trois modes d'action sur le signal d'erreur de l'électronique de rétroaction. Ce type de rétroaction permettant de faire converger le signal d'erreur vers une valeur nulle est bien connu en automatique.

Concernant le choix de la fréquence de modulation à appliquer à PM, si la finesse de la cavité est grande, la largeur des résonances de la cavité sera faible devant l'intervalle spectral libre et la fréquence de modulation pourra être choisie très grande devant la largeur fréquentielle des pics de résonance de la cavité. On sera alors dans la situation optimale, correspondant à l'explication précédente, pour cet asservissement. A l'opposé, si la finesse de la cavité n'est pas très grande, la fréquence de modulation sera proche de la largeur fréquentielle des pics de résonance de la cavité. Les side- bands sont alors partiellement modifiées quand la fréquence *f* s'écarte de la résonnance et l'asservissement est moins performant.

La boucle d'asservissement rétroagit sur le laser par exemple via la tension continue alimentant le laser (dans le cas d'un laser semiconducteur par exemple) de manière à maintenir ou conserver la fréquence du laser *f* sur une fréquence de résonance de la cavité. Alternativement, l'asservissement est réalisé sur la longueur de la cavité, la fréquence du laser restant fixe. Plus précisément, le dispositif comprend un étage de translation piézoélectrique (non représenté en figure 1) sur lequel est fixé un des miroirs de la cavité par exemple, de manière à contrôler une longueur de la cavité ou bien à étendre ou contracter une partie de la cavité s'il s'agit d'une cavité en fibre. Une dernière option consiste en réalisant l'asservissement sur l'AOM via la fréquence d'excitation de l'AOM.

Cette technique fonctionne théoriquement parfaitement. Cependant, en pratique, elle souffre d'un défaut majeur. En effet, la plupart des modulateurs de phase sont à base de cristaux électro-optiques (par exemple ceux en Niobate de Lithium) et introduisent une modulation d'amplitude associée à la modulation de phase (residual amplitude modulation, RAM). En effet, le milieu utilisé étant biréfringent, cette modulation est due au fait que la polarisation incidente du rayonnement laser n'est pas parfaitement alignée sur l'axe utilisé du cristal. En sortie du modulateur, le champ électrique comporte deux composantes liées à l'importance de la projection du champ électrique incident sur les deux axes du cristal. De plus, il est fréquent qu'en sortie du modulateur de phase, un polariseur plus ou moins parfait soit inclus sur le chemin (parce qu'un coupleur ou un isolateur ou encore un circulateur est inséré derrière le modulateur de phase ou bien parce que l'état de polarisation doit être bien défini pour des besoins liés à l'expérience et alors un polariseur est introduit). Après projection sur la direction passante du polariseur, le mélange de ces deux composantes induit une modulation d'amplitude associée à la modulation de phase.

Le problème est que ces deux modulations de phase et d'amplitude sont à la même fréquence $f_{mod}$. Le processus de démodulation expliqué plus haut ne permet donc pas de les séparer et la modulation d'amplitude se traduit par un biais sur le signal d'erreur. Lorsque ce signal d'erreur est utilisé par un asservissement, ce biais se traduit par un verrouillage du laser à côté de la résonance de la cavité ou du pic d'absorption. De plus, ce biais peut varier car il est sensible à la température car il dépend de la biréfringence naturelle du cristal.

Afin de corriger la RAM, la méthode la plus classique consiste, en sortie du modulateur de phase PM, à prélever, par le biais d'une lame séparatrice LSP, une partie du faisceau laser LL modulé en phase et à le détecter par une photodiode $PD_{ram}$ dite de contrôle de RAM (voir figure 1). En démodulant à la fréquence de modulation, il est alors possible de générer un signal proportionnel au biais induit. Ce signal est utilisé pour contre-réagir sur le cristal par le biais du processeur UT en lui appliquant, en plus de la tension de modulation, une tension continue ou lentement variable en fonction des fluctuations du biais. Cette tension continue vient créer une biréfringence qui s'oppose à la biréfringence naturelle du cristal. Le biais est ainsi correctement annulé sur cette photodiode $PD_{ram}$.

Le défaut majeur de cette approche est que cette photodiode $PD_{ram}$ n'est pas la photodiode $PD_r$ qui permet d'asservir le laser L sur la cavité C. Or, dans le cas où le montage comprend d'autres composants biréfringents (fibres optiques, circulateurs, coupleurs...) après le modulateur de phase PM, annuler l'amplitude de modulation sur la photodiode $PD_{ram}$ ne garantit pas son annulation sur la photodiode $PD_r$.

La figure 2 illustre plus précisément ce problème dans un exemple non limitatif. Dans cette figure, le dispositif comprend un polariseur Pol en entrée avant le modulateur de phase PM qui est suivi d'un coupleur 1x2 couplé à deux fibres à maintien de polarisation. Une fibre est redirigée vers $PD_{ram}$ (non représentée en figure 2) et l'autre fibre FMP vers la cavité C à travers le circulateur CO comprenant un polariseur. Le polariseur du CO permet par exemple de bien fixer l'état de la polarisation du champ incident sur la cavité afin d'éviter d'introduire des biais ou instabilité dus à la déformation des résonances par l'excitation d'une mauvaise polarisation. Le champ sortant du modulateur de phase s'écrit (axe ordinaire selon y et axe extraordinaire selon z):

$$\overrightarrow{E_{PM}} = E_0 e^{i\omega t}\left(e^{i\phi_3}\cos\beta\,\vec{z} + e^{i\phi_2}\sin\beta\,\vec{y}\right),$$

avec $\phi_{2,3} = \phi_{o,e} + \phi_{o,e}^{dc} + \delta_{o,e} \sin \omega_{mod} t$, la phase appliquée par le modulateur de phase

$$\phi_{o,e} + \phi_{o,e}^{DC} = \frac{2\pi l}{\lambda} n_{o,e} - \frac{\pi l}{\lambda d} r_{o,e} n_{o,e}^3 V_{DC},$$

avec $n_{o,e}$ les indices selon les axes ordinaire et extraordinaire respectivement, et $V_{DC}$ la tension continue appliquée au modulateur de phase $\delta_{o,e} = -\frac{\pi l}{\lambda d} r_{o,e} n_{o,e}^3 V_{RF}$, avec *l,d* les dimensions du modulateur de phase et $V_{RF}$ la tension alternative appliquée au modulateur de phase et $f_{mod} = \omega_{mod}|2\pi$ la fréquence de modulation.

On rappelle que pour un asservissement de type Pound-Drever-Hall, la profondeur de modulation optimale $M = \delta_e$ vaut environ 1 rad et compte tenu des valeurs de $n_o$ = 2,2108, $n_e$ = 2,1373, $r_o = 8{,}6pm/V$, $r_e = 30{,}8pm/V$, on a

$$\delta_o = \delta_e \frac{r_o n_o^3}{r_e n_e^3} \approx 0.3$$

Soit $\beta'$ l'angle entre l'axe z du cristal du modulateur de phase et l'axe z' de la fibre FMP de sorte que :

$$\vec{z} = \cos\beta' \ \overrightarrow{z'} + \sin\beta' \ \overrightarrow{y'}$$

$$\vec{y} = -\sin\beta' \ \overrightarrow{z'} + \cos\beta' \ \overrightarrow{y'}$$

$$\overrightarrow{E_{PM}} = E_0 e^{i\omega t}\left(e^{i\phi_3}\cos\beta\left(\cos\beta' \ \overrightarrow{z'} + \sin\beta' \ \overrightarrow{y'}\right) + e^{i\phi_2}\sin\beta\left(-\sin\beta' \ \overrightarrow{z'} + \cos\beta' \ \overrightarrow{y'}\right)\right)$$

$$= E_0 e^{i\omega t}\left(\left(e^{i\phi_3}\cos\beta\cos\beta' - \sin\beta\sin\beta' e^{i\phi_2}\right)\overrightarrow{z'} + \left(e^{i\phi_3}\cos\beta\sin\beta' + e^{i\phi_2}\sin\beta\cos\beta'\right)\overrightarrow{y'}\right)$$

Après traversée de la fibre FMP, caractérisée par son indice $n_{slow}$ le long de l'axe z et $n_{fast}$ le long de l'axe y:

$$\overrightarrow{E_{FMP}} = E_0 e^{i\omega t}\left[\left(e^{i\phi_3}\cos\beta\cos\beta' - \sin\beta\sin\beta' e^{i\phi_2}\right) e^{i\phi_s}\overrightarrow{z'} + \left(e^{i\phi_3}\cos\beta\sin\beta' + e^{i\phi_2}\sin\beta\cos\beta'\right)e^{i\phi_f}\overrightarrow{y'}\right],$$

avec $\phi_{f,s}$ le déphasage induit par la fibre FMP selon l'axe y et z respectivement, puis après le polariseur du CO orienté à *y'* de l'axe z', le champ $E_{co}$ s'écrit :

$$\overrightarrow{E_{CO}} = E_0 e^{i\omega t} e^{i\frac{\phi_s+\phi_f}{2}}\left[\left(e^{i\phi_3}\cos\beta\cos\beta' - \sin\beta\sin\beta' e^{i\phi_2}\right) e^{i\frac{\phi_s-\phi_f}{2}} cos\gamma' + \left(e^{i\phi_3}\cos\beta\sin\beta' + e^{i\phi_2}\sin\beta\cos\beta'\right)e^{-i\frac{\phi_s-\phi_f}{2}} sin\gamma'\right]\overrightarrow{\gamma'}$$

en posant $\Delta\phi' = \frac{\phi_s - \phi_f}{2}$

$$= E_0 e^{i\omega t} e^{i\frac{\phi_s+\phi_f}{2}} \left[ e^{i\phi_3} \cos\beta \left( \cos\beta' \, cos\gamma' e^{i\frac{\Delta\phi'}{2}} + \sin\beta' \, sin\gamma' e^{-i\frac{\Delta\phi'}{2}} \right) + e^{i\phi_2} \sin\beta \left( -\sin\beta' \, cos\gamma' e^{i\frac{\Delta\phi'}{2}} + \cos\beta' sin\gamma' \, e^{-i\frac{\Delta\phi'}{2}} \right) \right] \overrightarrow{\gamma'}$$

Equation 1 :

$$\overrightarrow{E_{CO}} = E_0 e^{i\omega t} e^{i\frac{\phi_s+\phi_f}{2}} \left[ b' \, e^{i\phi_3} + a' \, e^{i\phi_2} \right] \overrightarrow{\gamma'} = E_0 e^{i\omega t} e^{i\frac{\phi_s+\phi_f}{2}} \left[ |b'| \, e^{i(\phi_3 + \phi_{b'})} + |a'| \, e^{i(\phi_2 + \phi_{a'})} \right] \overrightarrow{\gamma'}$$

en introduisant

$$b' = \cos\beta \left( \cos\beta' \, cos\gamma' e^{i\frac{\Delta\phi'}{2}} + \sin\beta' \, sin\gamma' e^{-i\frac{\Delta\phi'}{2}} \right) = |b'| e^{i\phi_{b'}}$$

$$a' = \sin\beta \left( -\sin\beta' \, cos\gamma' e^{i\frac{\Delta\phi'}{2}} + \cos\beta' sin\gamma' \, e^{-i\frac{\Delta\phi'}{2}} \right) = |a'| e^{i\phi_{a'}}$$

L'intensité sur la photodiode de contrôle de RAM est alors :

$$I_T = E_{CO}.\overline{E_{CO}} = |E_0|^2 \left( |a'|^2 + |b'|^2 + 2|b'||a'| cos\big( (\phi_3 - \phi_2) + \phi_{b'} - \phi_{a'} \big) \right)$$

Avec

$$\phi_3 - \phi_2 = \frac{2\pi l}{\lambda}(n_0 - n_e) - \frac{\pi l}{\lambda d}(r_o n_o^3 - r_e n_e^3) V_{DC} - \frac{\pi l}{\lambda d}(r_o n_o^3 - r_e n_e^3) V_{RF}.\sin(\omega_{mod} t)$$

En posant :

$$\Delta\phi + \Delta\phi^{DC} = \phi_o - \phi_e + \phi_o^{DC} - \phi_e^{DC} = \frac{2\pi l}{\lambda}(n_0 - n_e) - \frac{\pi l}{\lambda d}(r_o n_o^3 - r_e n_e^3) V_{DC}$$

En décomposant en harmonique, puis en sélectionnant la première harmonique et en démodulant le signal généré par le système Dem à $\omega_{mod}$, avec une phase de démodulation choisie nulle, on obtient un signal d'erreur de RAM $V_{RAM}$ à annuler qui vaut :

$$V_{RAM} = -2|a'||b'||E_0|^2 J_1(M) \sin(\Delta\phi + \Delta\phi^{dc} + \phi_{b'} - \phi_{a'}),$$

avec $J_1$ la fonction de Bessel d'ordre 1.

Ainsi, la tension continue $V_{DC}$ à appliquer au modulateur de phase modifie $\Delta\phi^{dc}$ et doit corriger à la fois la biréfringence du cristal et celle de la fibre ($\phi_{b'} - \phi_{a'}$) pour que $V_{RAM} = 0$ c'est-à-dire $\sin(\Delta\phi + \Delta\phi^{dc} + \phi_{b'} - \phi_{a'}) = \sin(\Delta\phi_{RAM}) = (2k + 1)\,\pi/2$ . C'est bien sûr possible car la correction est modulo $2\pi$ mais le problème est que la partie du faisceau qui se propage dans l'autre fibre du coupleur vers la cavité subira d'autres fluctuations. La correction sur la photiode de contrôle de RAM ne permet donc pas la correction sur l'autre faisceau. Cette analyse peut être effectuée dans d'autres cas, par exemple si un polariseur est présent entre le modulateur de phase et la fibre optique. Elles conduisent à la même condition $\sin(\Delta\phi + \Delta\phi^{dc} + \phi_{b'} - \phi_{a'}) = k\pi$ avec une définition de $\phi_{b'} - \phi_{a'}$ qui dépend du montage. La conclusion est ainsi identique: l'annulation sur un bras du montage ne garantit pas l'annulation sur un autre bras sauf éventuellement en espace libre avec absence d'éléments polarisants. Une autre limitation commune à un montage espace libre ou fibré dans lequel une photodiode est dédiée au contrôle de la RAM et une autre au verrouillage du laser et de la cavité est la phase de démodulation. Il faut en effet, pour bénéficier au mieux de l'annulation de la RAM, que la phase de démodulation utilisée pour générer le signal d'erreur qui sert à verrouiller le laser soit la même que celle que celle utilisée pour annuler la RAM sur la photodiode de contrôle de la RAM. Si ce n'est pas le cas, le processus de démodulation fait apparaitre une composante liée à la RAM. Dans la pratique, il n'est pas aisé de garantir cette égalité des phases. Les phases de démodulations, qui sont réglées sur les détections synchrones, corrigent en effet les délais dus à l'électronique (amplificateur en sortie photodiode, propagation dans les câbles, dans la détection synchrone..) et ces phases peuvent dériver.

L'invention vise à pallier certains des problèmes précités de l'art antérieur. Plus précisément, l'invention porte sur une méthode permettant de réaliser la correction de la RAM sur la même photodiode que celle utilisée pour réaliser l'asservissement de la fréquence optique laser sur la résonnance de la cavité. Cette méthode permet donc de s'affranchir d'une erreur introduite par la biréfringence des composants introduits après le modulateur de phase.

Par ailleurs l'article "Suppression of residual amplitude modulation of ADP electro-optical modulator in Pound-Drever-Hall laser frequency stabilization" (ISSN: 0030-3992, DOI: 10.1016/J.OPTLASTEC.2020.106758) enseigne une mesure et analyse de modulation d'amplitude résiduelle, RAM, à l'aide d'une photodiode détectant le rayonnement réfléchi par une cavité résonante et différenciant deux signaux de démodulation.

**Résumé de l'invention *:***

A cet effet, un objet de l'invention est une méthode d'asservissement d'un dispositif optique comprenant une cavité présentant une résonance autour d'une fréquence centrale $f_c$, un laser et un modulateur de phase, ladite méthode étant adaptée pour asservir ladite cavité sur ledit laser ou réciproquement et pour compenser une modulation d'amplitude introduite par ledit modulateur de phase, ladite méthode comprenant les étapes suivante :

- Générer, par ledit laser, un rayonnement laser à une fréquence optique f comprise dans ladite résonance
- Faire varier un écart $\delta v$ entre ladite fréquence optique dudit rayonnement laser et ladite fréquence centrale de manière à ce que ladite fréquence optique balaye ladite résonance, ledit écart étant contrôlé par un paramètre d'un élément dudit dispositif, et pour chaque écart $\delta v_i$

  o Moduler, à une fréquence de modulation $f_{mod}$, une phase dudit rayonnement laser, par une phase de modulation $\phi_{mod}$, avec le modulateur de phase,

  o Injecter le rayonnement modulé en phase dans ladite cavité,

  o Détecter, par une photodiode, un rayonnement réfléchi ou transmis par ladite cavité et générer un signal électrique représentatif de l'intensité dudit rayonnement détecté,

  o Démoduler ledit signal électrique à ladite fréquence de modulation $f_{mod}$ en générant de manière synchrone un premier signal démodulé et un deuxième signal démodulé représentatif du signal électrique démodulé, respectivement à une première phase de démodulation $\phi_{dem,1}$ et à une deuxième phase de modulation $\phi_{dem,2}\phi_{dem,2} \approx \phi_{dem,1}{}^{k}$, avec $k \in [0; 2\pi]$ différente de ladite première phase et en filtrant le premier et le deuxième signal de manière à conserver uniquement une composante continue du premier signal démodulé $V\varepsilon_1$ dit signal d'erreur 1 et du deuxième signal démodulé $V\varepsilon_2$, dit signal d'erreur 2

C. Calculer une fonction 1 $f_2$ et une fonction 2 $f_2$ représentant respectivement une évolution du signal d'erreur 1 et une évolution du signal d'erreur 2 en fonction dudit écart pour une valeur donnée de ladite première phase de démodulation,

D. Répéter les étapes B) et C) en faisant varier ladite première phase de démodulation entre chaque répétition jusqu'à ce que, pour une valeur de la première phase de démodulation dite phase de découplage $\phi_{dem,1} = \phi_{dec}$, ladite fonction 1 ou ladite fonction 2 présente un plateau sur une portion de valeurs dudit écart comprenant 0, ladite fonction parmi 1 ou 2 présentant le plateau étant appelée fonction PL, la fonction ne présentant pas le plateau étant appelée fonction SP ;

E. A ladite phase de découplage, faire varier ledit écart de manière à observer un extremum, pour un écart dit nul, ladite intensité du rayonnement lumineux détectée par ladite photodiode et asservir ledit élément sur une valeur dudit paramètre permettant de maintenir cet extremum d'intensité,

F. A ladite phase de découplage, moduler la phase dudit rayonnement laser, avec le modulateur de phase (PM), par un signal périodique dit additionnel à une fréquence de modulation dite additionnelle $f_{add}$ en plus de celle à ladite fréquence de modulation $f_{mod}$ ;

G. Minimiser, pour la fonction SP, une amplitude d'une première harmonique du signal additionnel, en faisant varier ladite première phase de démodulation, ce minimum étant atteint pour une première phase de démodulation dite additionnelle $\phi_{dem,1} = \phi_{dec2}$, et, à ladite phase additionnelle, asservir ledit élément sur une valeur dudit paramètre permettant de maintenir cet extremum d'intensité

H. A ladite phase de découplage $\phi_{dem,1} = \phi_{dec}$ et audit écart nul, faire varier ladite première phase de modulation jusqu'à annuler la fonction PL, et maintenir l'annulation de ladite fonction PL par un asservissement dudit modulateur de phase.

Selon un mode particulier de la méthode de l'invention, l'étape H) consiste à faire varier une tension $V_{dc,pm}$ dudit modulateur de phase jusqu'à une valeur de tension dite de RAM permettant d'annuler la fonction PL et asservir ledit modulateur de phase sur ladite tension de RAM.

Selon un autre mode de réalisation particulier de la méthode de l'invention, compatible avec le précédent, mode de réalisation, dans l'étape iii), ladite photodiode détecte le rayonnement transmis par ladite cavité et ladite méthode comprend une étape D1) après l'étape D) et avant l'étape E) consistant à faire varier ladite fréquence de modulation jusqu'à ce qu'une pente de ladite fonction SP soit maximale sur ladite portion de valeurs, en répétant l'étape D pour chaque fréquence de modulation.

Selon un autre mode de réalisation particulier de la méthode de l'invention, compatible avec les deux modes précédents, la fréquence additionnelle $f_{add}$ est 10 fois inférieure à la fréquence de modulation $f_{mod}$.

Un autre objet de l'invention est un dispositif optique comprenant une cavité présentant une résonance autour d'une fréquence centrale $f_c$ et un laser adapté pour un générer rayonnement laser à une fréquence optique f comprise dans ladite résonance, ledit dispositif comprenant :

- un élément adapté pour faire varier un écart $\delta v$ entre ladite fréquence optique dudit rayonnement laser et ladite fréquence centrale de manière à ce que ladite fréquence optique balaye ladite résonance, ledit écart étant contrôlé par un paramètre dudit élément,

- un modulateur de phase configuré pour moduler à une fréquence de modulation $f_{mod}$, une phase dudit rayonnement laser, par une phase de modulation $\phi_{mod}$ et adapté pour faire varier ladite phase de modulation, le rayonnement modulé en phase étant injecté dans ladite cavité,

- une photodiode agencée pour détecter un rayonnement transmis ou réfléchis par ladite cavité et configurée pour générer un signal électrique représentatif de l'intensité dudit rayonnement détecté,

- un système de démodulation adapté pour démoduler ledit signal électrique à ladite fréquence de modulation $f_{mod}$, pour chaque écart $\delta v_i$, en :

  o générant de manière synchrone, un premier signal démodulé et un deuxième signal démodulé représentatif du signal électrique démodulé, respectivement à une première phase de démodulation $\phi_{dem,1}$ et à une deuxième phase de modulation $\phi_{dem,2}$ différente de ladite première phase de démodulation, tel que $\phi_{dem,2} \approx \phi_{dem,1} \pm k$, avec $k \in [0; 2\pi]$,

  o filtrant le premier et le deuxième signal de manière à conserver uniquement une composante continue du premier signal démodulé dit signal d'erreur 1 $V\varepsilon_1$ et du deuxième signal démodulé dit signal d'erreur 2 $V\varepsilon_2$

- un processeur relié au système de modulation et adapté pour :

  o calculer une fonction 1 et une fonction 2 représentant respectivement une évolution du signal d'erreur 1 et une évolution du signal d'erreur 2 en fonction dudit écart $\delta v$ pour une valeur donnée de ladite première phase de démodulation,

o déterminer une valeur de la première phase de démodulation dite phase de découplage $\phi_{dem,1} = \phi_{dec}$ pour laquelle ladite fonction 1 ou ladite fonction 2 présente un plateau sur une portion de valeurs dudit écart comprenant 0, ladite fonction parmi X ou Y présentant le plateau étant appelée fonction PL, la fonction ne présentant pas le plateau étant appelée fonction SP,

o déterminer, à ladite phase de découplage, un écart dit écart nul pour lequel ladite intensité du rayonnement lumineux détectée par ladite photodiode atteint un extremum, et asservir ledit élément sur une valeur dudit paramètre permettant de maintenir cet extremum d'intensité

o moduler, a ladite phase de découplage, la phase dudit rayonnement laser, avec le modulateur de phase, par un signal périodique dit additionnel à une fréquence de modulation dite additionnelle $f_{add}$ en plus de celle à ladite fréquence de modulation $f_{mod}$ ;

o minimiser, pour la fonction SP, une amplitude d'une première harmonique du signal additionnel en faisant varier ladite deuxième phase de démodulation, ce minimum étant atteint pour une deuxième phase de démodulation dite additionnelle, et asservir ledit élément sur une valeur dudit paramètre permettant de maintenir cet extremum d'intensité à ladite phase additionnelle

o déterminer, à ladite phase de découplage et audit écart nul, une valeur de ladite phase de modulation pour laquelle ladite fonction PL s'annule, et asservir ledit modulateur de phase afin de maintenir l'annulation de ladite fonction PL.

Selon un mode de réalisation particulier du dispositif de l'invention, l'élément est ledit laser et ledit paramètre est une tension continue $V_{dc,L}$ d'alimentation du laser.

Selon un autre mode de particulier du dispositif de l'invention, l'élément est un modulateur acousto-optique configuré pour faire varier ladite fréquence optique du rayonnement laser avant qu'il soit modulé en phase par ledit modulateur de phase, ledit paramètre étant une fréquence d'excitation $f_{AOM}$ dudit modulateur acousto-optique.

Selon un autre mode de réalisation particulier du dispositif de l'invention, l'élément est un étage de translation piézoélectrique sur lequel est fixé un composant de ladite cavité, ledit étage étant adapté pour faire varier une longueur de la cavité, ledit paramètre étant ladite longueur de la cavité.

Selon un mode de réalisation particulier du dispositif de l'invention compatible avec tous les modes de réalisation de l'invention, la cavité est une cavité en anneau comprenant une fibre optique et un premier et un deuxième moyen de couplage configurés pour coupler ledit rayonnement injecté dans ladite cavité avec ladite fibre optique, le premier et le deuxième moyen de couplage comprenant un miroir ou un coupleur fibré.

Selon une variante du précédent mode de réalisation particulier du dispositif de l'invention, le dispositif comprend :

- un séparateur optique adapté pour séparer le rayonnement laser en une première et une deuxième voie optique de manière à injecter ledit rayonnement laser au sein de la cavité selon un premier et un deuxième sens,

la première voie optique comprend le modulateur de phase et un circulateur optique placé après le modulateur de phase,

la deuxième voie optique comprend un modulateur de phase additionnel, et un circulateur optique additionnel placé après le modulateur de phase additionnel,

ledit circulateur optique et ledit circulateur optique additionnel étant adaptés pour diriger le rayonnement laser injecté respectivement selon ledit deuxième sens et selon ledit premier sens puis réfléchis par la cavité vers une photodiode de réflexion additionnelle et vers ladite photodiode,

un premier trajet optique de ladite première voie optique et une second trajet optique ladite deuxième voie optique entre respectivement le modulateur de phase et ladite cavité, et le modulateur de phase additionnel et ladite cavité étant en optique guidée.

**<u>Brève description des figures</u>** :

D'autres caractéristiques, détails et avantages de l'invention ressortiront à la lecture de la description faite en référence aux dessins annexés donnés à titre d'exemple et qui représentent, respectivement :

La figure 1, une vue schématique d'un dispositif d'asservissement laser sur une cavité de l'art antérieur,

La figure 2, une vue schématique de l'état de polarisation de la lumière lors de sa propagation au sein d'un modulateur de phase,

Les figures 3A et 3B, une vue schématique d'un dispositif optique selon l'invention pour réaliser un asservissement d'un laser sur une cavité laser

La figure 4, une méthode selon l'invention,

Les figures 5A et 5B, respectivement un exemple des fonctions PL et SP, avant asservissement, à la phase de découplage $\phi_{dec}$ = -73.16° en fonction de $\delta v/ISL$

Les figures 6A et 6B, respectivement un exemple des fonctions PL et SP, avant asservissement, à la phase de découplage $\phi_{dec}$ = 92.44° en fonction de $\delta v/ISL$, avec les même paramètres de la cavité que ceux utilisés pour les figures 5A et 5B, pour un fonctionnement en réflexion,

La figure 7, un mode de réalisation de la méthode de la figure 4,

La figure 8, un dispositif identique à celui du mode de réalisation de la figure 3 à l'exception du fait que l'asservissement est réalisé sur un modulateur acousto-optique,

La figure 9, un dispositif identique à celui du mode de réalisation de la figure 3 à l'exception du fait que l'asservissement est réalisé sur un étage de translation pièzoélectrique sur lequel est fixé un composant de la cavité,

La figure 10, un mode de réalisation identique au dispositif de la figure 8 à l'exception du fait que la cavité est une cavité en anneau et comprend une fibre optique,

La figure 11, un mode de réalisation de l'invention dans lequel le dispositif D comprend une cavité résonante passive en anneau C dans laquelle il est possible d'injecter le faisceau laser selon un premier sens, par une première voie optique et selon un deuxième sens par une deuxième voie optique,

Les figures 12A et 12B, respectivement une évolution de $V_{\varepsilon_1} = \sum_{k=0}^{p} Re(b_k)\cos(\varphi_{dem}) + Im(b_k)\sin(\varphi_{dem})$ et de $V_{\varepsilon_2} = \sum_{k=0}^{p} -Re(b_k)\sin(\varphi_{dem}) + Im(b_k)\cos(\varphi_{dem})$ en fonction de $\Delta\phi$,

Les figures 13A et 13B, une évolution de $V_{\varepsilon_x} = \sum_{k=0}^{p} Re(A_k)\, Re(K_k)$ et $V_{\varepsilon_y} = \sum_{k=0}^{p} Re(A_k)\, Im(K_k)$ en fonction de $f_{mod}/ISL$.

Les références aux figures, quand elles sont identiques, correspondent aux mêmes éléments.
Dans les figures, sauf contre-indication, les éléments ne sont pas à l'échelle.

**Description détaillée :**

Les figures 3A et 3B illustrent une vue schématique d'un dispositif optique D selon l'invention pour réaliser un asservissement d'un laser L sur une cavité laser C (dans la figure une cavité linéaire mais cela peut être aussi une cavité en anneau) tout en réalisant une correction de la RAM introduite par un modulateur de phase PM. La figure 3A illustre une première variante dans laquelle l'asservissement et la correction de RAM sont réalisés à l'aide d'une photodiode $PD_r$ détectant le rayonnement réfléchi par la cavité. La figure 3B illustre une deuxième variante dans laquelle l'asservissement et la correction de RAM sont réalisés à l'aide d'une photodiode *PDt* détectant le rayonnement transmis par cette cavité. Ce dispositif est destiné à mettre en œuvre la méthode d'asservissement décrite dans les figures 4 et 7 que l'on détaillera plus loin.
Structurellement, le dispositif D est proche de celui de l'art antérieur présenté en figure 1 à une exception majeure qui réside dans le fait que la correction de la RAM est effectuée sur une photodiode PDr ou PDt, détectant un rayonnement réfléchi ou transmis par la cavité C, qui est la même que celle utilisée pour réaliser l'asservissement du laser sur la résonnance de la cavité. Ainsi, le dispositif et la méthode associée permettent compenser la RAM sans que la biréfringence des composants placés après le modulateur de phase introduise des erreurs sur la correction de la RAM et sur l'asservissement du laser sur la cavité. Pour plus de clarté, les équations démontrant qu'il est possible d'asservir à la fois le laser sur la cavité et de contrôler la RAM pour qu'elle n'introduise pas de biais sont données en section annexe. On montre aussi dans cette section que l'on peut découpler l'asservissement du laser et celui du modulateur de phase PM pour annuler la RAM à l'aide de signaux d'erreurs générés à partir d'une seule photodiode PDr (figure 3A) ou PDt (figure 3B).

Dans le dispositif D, le laser L génère un faisceau laser LL à une fréquence optique f comprise dans une résonance de la cavité C. Ce faisceau laser LL traverse alors le modulateur de phase PM. Le modulateur de phase applique au faisceau laser LL une phase $\phi_{mod}$ qui est modulée à une fréquence $f_{mod} = \omega_{mod}/2\pi$. Comme vu précédemment, le modulateur de phase applique une phase $\phi_{mod} = \phi_{o,e} + \phi_{o,e}^{dc} + \delta_{o,e} \sin \omega_{mod} t$, selon l'axe ordinaire « o » et l'axe extraordinaire « e ».

Par ailleurs, comme

$$\phi_{o,e} + \phi_{o,e}^{DC} = \frac{2\pi l}{\lambda} n_{o,e} - \frac{\pi l}{\lambda d} r_{o,e} n_{o,e}^3 V_{DC},$$

il est possible de faire varier la phase de modulation $\phi_{mod}$ en faisant varier la tension continue appliquée au modulateur de phase.

La fréquence de modulation $f_{mod}$ est appliquée par un oscillateur local OL. La profondeur de modulation $M = \delta_e$ peut prendre n'importe quelle valeur mais dans un montage tel que décrit précédemment, elle vaut typiquement 1.1 *rad*. Alternativement, selon un autre mode la profondeur de modulation vaut 2.45 *rad*. Le choix d'une profondeur de modulation plus élevée permet de supprimer la porteuse optique. Il est utilisé dans certaines configurations de cavité en anneau pour adresser le problème lié à la rétrodiffusion dans la cavité. Par exemple, un gyroscope passif résonant est constitué d'une cavité optique sondée par deux faisceaux contrapropatifs. Sous l'effet de la rotation, les fréquences de résonances vont être modifiées différemment (effet Sagnac) sauf si la rétrodiffusion est tellement forte qu'elle verrouille en fréquence les deux porteuses optiques empêchant alors toute mesure de la vitesse Une solution consiste alors à adapter le gyroscope pour le faire fonctionner en supprimant les porteuses optiques.

De plus, dans tous les modes de réalisation de l'invention, D comprend un élément adapté pour faire varier un écart $\delta v$ entre la fréquence optique du rayonnement laser LL et la fréquence centrale $f_c$, cet écart étant contrôlé par un paramètre de l'élément. Ainsi, cet élément permet de réaliser l'asservissement de la résonance de la cavité sur la fréquence optique du laser ou inversement. Plus précisément, il faut que l'élément soit adapté pour que la fréquence optique f balaye la résonance. Dans le mode de réalisation des figures 3A et 3B, c'est le laser lui-même qui est adapté pour faire varier $\delta$v, par l'intermédiaire de la tension continue $V_{dc,l}$ alimentant le laser L. Alternativement, dans le mode de réalisation des figures 8 et 9, ce sont respectivement le modulateur acousto optique AOM et un étage de translation piézoélectrique TS sur lequel est fixé un composant de la cavité qui sont l'élément permettant de faire varier l'écart $\delta$v.

Après avoir traversé le modulateur de phase PM, le faisceau laser modulé en phase traverse un circulateur optique CO qui peut comprendre un polariseur (non représenté en figures 3A et 3B) afin de fixer l'état de la polarisation du champ incident sur la cavité (ou bien le polariseur peut être placé entre le circulateur et la cavité). La présence d'un polariseur avant la cavité permet d'éviter d'introduire des biais ou instabilité dus à la déformation des résonances par l'excitation d'une mauvaise polarisation.

Le rayonnement modulé en phase est ensuite injecté dans la cavité C. Cette cavité peut être n'importe quel type de cavité optique résonante connue de l'homme de l'art, linéaire ou en anneau, fibré ou non. Elle présente un mode résonant centré en la fréquence centrale $f_c$ avec une largeur de raie $\Delta f_c$. Dans les figures 3A et 3B sont représentés un premier moyen de couplage M1 et un deuxième moyen de couplage M2 permettant de réaliser le couplage du faisceau laser LL à la cavité. Ces moyens peuvent typiquement être des miroirs ou des coupleurs dans le cas d'une cavité fibrée.

Le dispositif D comprend une seule photodiode PDr ou PDt agencée pour détecter respectivement un rayonnement transmis ou réfléchi par la cavité. Les photodiodes PDr, PDt génèrent respectivement un signal Sr, St représentatif de l'intensité du faisceau laser détectée.

Le dispositif selon l'invention et les méthodes associées mise en œuvre par le dispositif fonctionnent avec une seule photodiode et utilise donc soit le signal Sr détecté par PDr, soit le signal St détecté par PDt. Dans la suite le signal utilisé est symbolisé par St, Sr généré par la photodiode PDt, PDr.

La photodiode PDr est illuminée par le rayonnement réfléchi par C puis isolé par le circulateur optique CO. De manière critique, pour un fonctionnement en réflexion (c'est-à-dire un asservissement à l'aide de la photodiode PDr), il faut que les sidebands soient le plus en dehors possible de la de la résonance de la cavité, préferentiellement mais pas

obligatoirement $f_{mod}$ >> $\Delta f_c/2$,. Dans le cas contraire, le comportement du signal d'erreur à la résonance est encore linéaire en fonction de $\delta v$ mais la pente est plus faible et l'asservissement peut être moins précis voir impossible.

La photodiode PDt est agencée de manière à être illuminée par le rayonnement transmis, par exemple par le moyen de couplage M2. Pour un fonctionnement en transmission (c'est-à-dire un asservissement à l'aide de la photodiode PDt), il faut que les sidebands soit couplés dans la cavité puis transmises par cette dernière, c'est-à-dire comprises dans la résonance, soit $f_{mod} < \Delta f_c$. Dans le cas contraire, les sidebands seraient trop réfléchies par la cavité et le signal d'erreur perdrait en amplitude.

Le dispositif comprend en outre un système de démodulation Dem adapté pour démoduler le signal électrique à la fréquence de modulation $f_{mod}$. Pour cela, Dem comprend un mélangeur de signaux électriques Mix relié à l'oscillateur local OL multipliant le signal généré par la photodiode par un signal de la forme $Acos(\omega_{mod}t + \phi_{dem})$. De manière importante, le mélangeur Mix est adapté pour générer de manière synchrone un premier signal démodulé et un deuxième signal démodulé. Le premier signal démodé est représentatif du signal électrique St, Sr démodulé à une première phase de démodulation $\phi_{dem,1}$, soit du signal St, Sr multiplié par $Acos(\omega_{mod}t + \phi_{dem',1})$. Le deuxième signal démodulé correspond à signal électrique St, Sr démodulé à une deuxième phase de modulation $\phi_{dem,2}$ différent de ladite première phase de démodulation, tel que $\phi_{dem,2} \approx \phi_{dem,1} \pm k$, avec $k \in [0; 2\pi]$ soit du signal St, Sr multiplié par $Acos(\omega_{mod}t + \phi_{dem,1} \pm k)$.

Préférentiellement, le deuxième signal démodulé correspond à signal électrique St, Sr démodulé à une deuxième phase de modulation $\phi_{dem,2}$ sensiblement en quadrature de ladite première phase de démodulation, tel que $\phi_{dem,2} \approx \phi_{dem,1} \pm \pi/2$. Par sensiblement en quadrature de phase, on entend ici que $\phi_{dem,2} = \phi_{dem,1} \pm \frac{\pi}{2} \pm 5\%$. Comme cela sera explicité plus loin, la génération de deux signaux d'erreurs avec ces phases de démodulation en quadrature de phase est une possibilité pour garantir qu'en asservissant les deux signaux à zéro on verrouille bien le laser et la cavité et que l'on supprime les biais dus à la RAM. Le choix de deux phases de démodulation en quadrature n'est pas obligatoire et on montrera par ailleurs qu'un choix de phases de démodulation approprié non en quadrature permet un découplage entre l'asservissement pour l'annulation de la RAM et l'asservissement du laser.

De plus, le système de démodulation comprend un filtre passe bas LP adapté pour filtrer le premier et le deuxième signal de manière à conserver uniquement une composante continue du premier signal démodulé dit signal d'erreur 1 noté $V_{\varepsilon 1}$.et du deuxième signal démodulé dit signal d'erreur 2 noté $V_{\varepsilon 2}$.

Enfin, le dispositif comprend un processeur UT configuré pour traiter le premier et le second signal d'erreur. Ce processeur UT est en outre configuré pour réaliser l'asservissement du laser L sur la cavité à partir des signaux $V_{\varepsilon 1}$ et $V_{\varepsilon 2}$ (voir plus loin), en maintenant une valeur de tension d'alimentation permettant un écart nul $\delta v = 0$. Enfin, le processeur permet un asservissement du modulateur de phase PM en maintenant une valeur tension $V_{dc,pm}$ alimentant PM permettant d'annuler la RAM (voir plus loin).

La figure 4 illustre une méthode adaptée pour asservir la cavité C sur le laser L ou réciproquement et pour compenser la modulation d'amplitude introduite par un modulateur de phase PM. Cette méthode est mise en œuvre par le dispositif des figures 3A, 3B et 6 à 9.

Cette méthode comprend une première étape A) consistant à générer, par le laser L, le rayonnement laser LL à la fréquence optique f comprise dans la résonance $\Delta f_c$ de la cavité C. Puis, dans une étape B, on fait varier l'écart $\delta v$ entre la fréquence optique de LL et la fréquence centrale $f_c$ de la résonance, de manière à ce que la fréquence optique balaye la résonance. Ainsi, l'écart $\delta v$ prend une pluralité de valeurs ($\delta v_1, \ldots \delta v_k, \ldots, \delta v_n$) et il existe une pluralité d'écarts $\delta v_j$ tels que $\delta vj < 0$ et il existe une pluralité d'écart $\delta v_i$ tels que $\delta v_i > 0$. Comme expliqué précédemment, l'écart est contrôlé par un paramètre d'un élément du dispositif, cet élément pouvant être le laser L, le modulateur acousto-optique AOM ou un étage de translation piézoélectrique TS.

Pour chaque écart $\delta v_i$, on réalise les sous étapes i-iv suivantes :

Une étape i) consistant à moduler, à une fréquence de modulation $f_{mod}$, une phase du rayonnement laser LL, par une phase de modulation $\phi_{mod}$, avec le modulateur de phase PM. La fréquence de modulation de PM est fixée par l'oscillateur local OL.

Une étape ii) consistant à injecter le rayonnement LL modulé en phase dans la cavité C.

Une étape iii) consistant à détecter, par une photodiode PDt, $PD_r$, un rayonnement réfléchi ou transmis par ladite cavité. La photodiode générer un signal électrique St, Sr représentatif de l'intensité du rayonnement détecté.

Enfin, une étape iv) consistant en démoduler, à l'aide du système de modulation Dem, le signal électrique St, Sr à la fréquence de modulation $f_{mod}$ en générant de manière synchrone un premier signal démodulé et un deuxième signal démodulé représentatif du signal électrique démodulé, respectivement à une première phase de démodulation $\phi_{dem,1}$ et à une deuxième phase de modulation $\phi_{dem,2}$. Ce couple de phases peut à priori prendre n'importe quelles valeurs tant qu'elles remplissent la condition exposée en annexe (condition A). Pour être sûr de remplir cette condition, on peut choisir la deuxième sensiblement en quadrature de ladite première phase de démodulation, tel que $\phi_{dem,2} \approx \phi_{dem,1} \pm \pi/2$. L'étape iv comprend de plus, une étape de filtrage, par le filtre passe bas LP, du premier et du deuxième signal démodulé de manière à conserver uniquement une composante continue du premier signal démodulé $V\varepsilon_1$ dit signal d'erreur 1 et du deuxième signal démodulé $V\varepsilon_2$ dit signal d'erreur 2.

Dans une étape C), les signaux d'erreur $V\varepsilon_1$ et $V\varepsilon_2$ obtenus pour chaque écart $\delta v_i$ sont traités par le processeur UT. L'étape C) comprend le calcul d'une fonction $f_1$ et une fonction $f_2$ représentant respectivement une évolution du signal d'erreur 1 et une évolution du signal d'erreur 2 en fonction de l'écart $\delta v$ pour une valeur donnée de $\phi_{dem,1}$ et $\phi_{dem,2}$ . Ainsi, $V\varepsilon_1 = f_1(\delta v)$ et $V\varepsilon_2 = f_2(\delta v)$. $f_1$ et $f_2$ peuvent être calculées par toutes les méthodes analytiques connues de l'homme de l'art. $f_1$ et $f_2$ sont les deux fonctions d'erreurs qui vont permettre de corriger la RAM tout en asservissant le laser sur la cavité (ou l'inverse) à l'aide d'une seule photodiode PDr, PDt sans induire d'erreur liée à la biréfringence de composants compris dans le dispositif.

Nous décrivons maintenant la méthode qui permet de régler le couple de phases de démodulation pour découpler les asservissements. La méthode de la figure 4 comprend une étape D consistant en une répétition des étapes B) et C) en faisant varier la première phase de démodulation $\phi_{dem,1}$ (étant entendu que la variation de $\phi_{dem,1}$ entraine celle de $\phi_{dem,2}$ qui reste à $\phi_{dem,1} + k$ ) entre chaque répétition jusqu'à ce que, pour une valeur de la première phase de démodulation dite phase de découplage $\phi_{dem,1} = \phi_{dec}$, la fonction 1 ou la fonction 2 présente un plateau sur une portion P de valeurs de l'écart $\delta v$ comprenant 0. La bonne phase de démodulation est trouvée lorsque le plateau correspond à une tension nulle ou quasi-nulle. S'il est initialement à une tension non nulle, il faut ramener le niveau du plateau vers la tension nulle en appliquant une tension $V_{DC}$ pour modifier $\Delta\phi^{dc}$ appliquée au modulateur de phase. Pendant ce réglage du niveau du plateau, la forme du signal démodulé risque d'être modifiée et on risque d'observer que le signal ne présente plus de plateau. Il faut alors agir de manière concomitante sur la phase de démodulation pour maintenir le plateau. La portion P comprend des valeurs de $\delta v$ qui sont toutes au voisinage de 0. Par la suite, pour plus de clarté, on appelle fonction PL la fonction parmi 1 ou 2 présentant le plateau en fonction de l'écart à la résonnance et on appelle fonction SP la fonction ne présentant pas le plateau. La fonction SP présente une pente et un comportement linéaire autour de la résonance $\delta v = 0$ permettant un asservissement de la cavité. Par « présenter un plateau », on entend, que sur la portion P, la dérivée de la fonction PL s'annule, soit $\frac{df_{PL}}{d\delta v}|_0 = 0$ . La fonction LP sera utilisée pour asservir la RAM car comme le montre les équations présentées en annexes, cette fonction est linéaire en fonction de la RAM autour de la valeur asservie qui annule l'effet de la RAM.

Le signal PL, utilisé pour asservir la RAM est ainsi décorrélè (comprendre ici indépendant) des écarts $\delta v$. C'est à dire que le signal appliqué au modulateur de phase ne contient aucune composante due aux fluctuations du laser autour de la résonnance de la cavité. Ainsi, le signal d'erreur PL dont la fonction présente un plateau possède deux propriétés particulières : proche d'une résonance il est indépendant de la fréquence laser (présence d'un plateau) mais il dépend linéairement de la phase $\Phi$mod (voir annexe et figures 13A, 13B). Le signal SP sert à asservir à zéro l'écart $\delta v$.

Les figures 5A et 5B présentent respectivement un exemple des fonctions PL et SP, avant asservissement, à la phase de découplage $\phi_{dec}$ en fonction de $\delta v/ISL$, avec ISL l'interval spectral libre de la cavité C. Pour rappel, $ISL = c/L_{cav}$ avec $L_{car}$ la longueur optique (qui tient compte de l'indice) de la cavité pour une cavité en anneau et $ISL = c/2L_{cav}$ pour une cavité linéaire. Dans cet exemple, à titre non limitatif, c'est la fonction 1, associée au signal d'erreur $Ve_1$, qui présente un plateau à la phase de découplage $\phi_{dec}$ = -73.16° et qui correspond donc à la fonction PL. La fonction 2, associée au signal d'erreur $Ve_2$, correspond donc à la fonction SP. Pour une phase de découplage de $\phi_{dec}$ = -73.16° + 90° = 16.84°, cela serait l'inverse. A titre non limitatif, la cavité C utilisée pour obtenir ces fonctions présentées en figure 5A et 5B présente une finesse de F = 12, une largeur de raie de $\Delta f_c = 1.2MHz$ et un interval spectral libre $ISL = 16MHz$. Les fonctions sont obtenues dans un mode de fonctionnement en transmission (détection avec PDt) avec $f_{mod} = 400kHz$. On a donc bien $f_{mod} < \Delta f_c/2$. La figure 5A permet d'observer que la fonction PL présente bien un plateau sur la portion P qui n'est pas nul car la RAM n'est pas nulle dans cette simulation. C'est à partir de cette fonction que va être réalisé l'annulation de la RAM et l'asservissement permettant d'assurer le maintien de l'annulation de la RAM. La figure 5B permet d'observer que la fonction SP présente une pente au voisinage de $\delta v/ISL$ sur la portion P. C'est cette pente et le comportement linéaire de la fonction SP autour de la résonance qui permettrait de réaliser l'asservissement de la fréquence optique du laser sur la cavité (ou inversement).

On peut donc utiliser ce couple de phases de démodulation. Cependant, à ce stade le signal SP n'est pas décorrélé de la RAM.

Les figures 6A et 6B présentent respectivement un exemple des fonctions PL et SP, avant asservissement, à la phase de découplage $\phi_{dec}$ en fonction de $\delta v/ISL$, avec les même paramètres de la cavité C que ceux utilisés pour les figures 5A et 5B, pour un fonctionnement en réflexion (détection sur PDr). Ici, à titre non limitatif, $f_{mod} = 4MHz$. On a donc bien $f_{mod} > \Delta f_c/2$. De plus, $\phi_{dec}$ = 92.44° et c'est la fonction 2 qui correspond à la fonction PL alors que la fonction 1 correspond à la fonction SP. Sur ces figures, sur une portion de valeurs P, on observe bien la présence d'un plateau pour la fonction PL et une variation linéaire de la fonction SP.

Apres l'étape D), la méthode de la figure 4 comprend une étape E consistant en, à la phase de découplage $\phi_{dec}$, faire varier l'écart δv de manière à maximiser l'intensité du rayonnement lumineux détectée par la photodiode PDt en transmission et minimiser l'intensité du rayonnement lumineux détectée par la photodiode PDr en réflexion. On cherche donc dans les deux cas à atteindre un extremum de l'intensité. Cette intensité maximale ou minimale est obtenue pour un écart $\delta v$ quasi nul car la RAM n'étant pas encore contrôlée, elle introduit un biais sur le signal SP. Ce signal peut être nul alors que le laser n'est pas bien verrouillé sur une résonance de la cavité (c'est ce qui pose un problème). Alternativement, l'étape E consiste à faire varier δv jusqu'à obtenir l'annulation de la fonction SP.

Après l'obtention de l'annulation de SP, l'étape D) comprend, en étape E, une étape d'asservissement de l'élément (laser L, AOM ou étage piézoélectrique TS) sur une valeur du paramètre permettant de contrôler l'écart $\delta v$ de manière à maintenir l'annulation de la fonction SP et ce quasi-maximum d'intensité sur PDt et ce quasi-minimum d'intensité sur PDr. Cette étape d'asservissement est effectuée par le processeur UT via une électronique de rétroaction connue en soit, selon les procédés classiques d'asservissement, par exemple, sans être restrictif, avec une électronique de rétroaction PI ou PID. Ce type de rétroaction permettant de faire converger le signal d'erreur vers une valeur souhaitée est bien connu en automatique. La RAM n'étant pas encore contrôlée à ce stade de la méthode, l'annulation de la fonction SP ne correspond pas forcement à une résonance, c'est-à-dire que l'intensité transmise n'est pas forcement maximale ou l'intensité réfléchie minimale. La phase de découplage, c'est-à-dire celle pour laquelle on obtient une fonction d'erreur présentant un plateau, rend possible l'asservissement de la fréquence laser sur la résonance (ou l'inverse) en utilisant le signal SP puis l'asservissement du PM afin d'annuler la RAM (voir plus loin).

Après l'étape E, afin de rendre le signal SP indépendant de la RAM, dans une étape F, lorsque le laser et la cavité sont verrouillés l'un sur l'autre, on applique, sur le modulateur de phase PM, un signal périodique dit signal additionnel avec une fréquence de modulation dite additionnelle $f_{add}$, qui s'additionne à la modulation RF à la fréquence de modulation $f_{mod}$. C'est-à-dire que le PM est modulé par deux signaux simultanément, un premier à la fréquence $f_{add}$, et un second à la fréquence de modulation $f_{mod}$. La fréquence $f_{add}$ de ce signal additionel doit être largement inférieure à la fréquence de modulation $f_{mon}$ de sorte que l'on puisse considérer que l'on module le biais DC du modulateur de phase (c'est-à-dire la composante continue). Par « largement inférieure », on entend ici 10 fois, préférentiellement 20 fois plus faible. Le signal additionnel peut être n'importe quel signal périodique communément utilisée en traitement du signal par l'homme de l'art, par exemple un signal triangulaire, créneau, sinusoïdal ou encore en dent de scie. Le signal de correction appliqué au laser ou à la cavité, c'est-à-dire celui généré par l'asservissement via la fonction SP est aussi modulé à cause du signal périodique additionnel.

Les équations en annexe montrent que l'on peut trouver une phase de démodulation dite additionnelle $\phi_{dem,1} = \phi_{dec2}$ telle que la fonction SP ne dépende plus de la RAM.

Pour trouver cette phase de démodulation additionnelle $\phi_{dec2}$, on fait varier la phase de démodulation jusqu'à atténuer au maximum la modulation sur la fonction SP par la modulation additionnelle sur le modulateur de phase. Afin de réaliser cela, la méthode comprend une étape G, qui consiste à minimiser, sur le signal SP, une amplitude d'une première harmonique du signal additionnel, en faisant varier la première phase de démodulation, ce minimum étant atteint pour la phase de démodulation $\phi_{dec2}$. Concrètement, cette minimisation est réalisée par une analyse spectrale de la fonction SP (par exemple avec une transformée de Fourier). Après avoir trouvé cette phase de démodulation additionnelle $\phi_{dec2}$, le signal additionnel n'est plus appliqué au modulateur de phase PM. On réalise alors à nouveau un asservissement sur l'élément (laser L, AOM ou étage piézoélectrique TS) sur une valeur du paramètre permettant de maintenir cet extremum d'intensité, à la phase additionnelle $_{\phi dec2}$.

Ainsi, en utilisant ces deux phases de démodulation découplage $\phi_{dec2}$ et $\phi_{dec}$ respectivement pour verrouiller le laser et la cavité et asservir la RAM, on utilise des signaux qui sont décorrélés, c'est-à-dire que le signal d'asservissement du laser ne dépend pas ou peu de la RAM et le signal d'asservissement de la RAM ne dépend pas ou peu d'un écart à la résonance.

Enfin, la méthode de la figure 4 comprend une dernière étape H), consistant en, à la phase de découplage $\phi_{dec}$ et à l'écart nul, faire varier la première phase de modulation $\phi_{mod,1}$ jusqu'à annuler la fonction PL et maintenir l'annulation par un asservissement du modulateur de phase PM. En effet, lorsque la RAM n'est pas contrôlée, le plateau autour de la résonance n'est pas à une valeur nulle comme on peut le voir sur la figure 4. Plus précisément l'étape H) consiste à faire varier la tension continue $V_{dc,m}$ d'alimentation du modulateur de phase jusqu'à une valeur de tension dite de RAM permettant d'annuler la fonction PL et asservir ledit modulateur de phase sur la tension de RAM. Ici encore cette étape d'asservissement est effectuée par le processeur UT via une électronique de rétroaction connue en soit, selon les procédés classiques d'asservissement, par exemple, sans être restrictif, avec une électronique de rétroaction PI ou PID. En pratique, on recherche, pour l'écart nul et à la phase de découplage $\phi_{dec}$, $V_{dc,m}$ tel que $f_{PL}(\phi_{mod}) = 0$ avec $f_{PL}$ la fonction PL. L'annulation de la fonction PL permet l'annulation de la RAM et permet un asservissement à la valeur de tension continue $V_{dc,m}$ d'alimentation du modulateur de phase même s'il existe un faible écart à la résonance (voir plus loin), c'est l'intérêt de la phase de découplage $\phi_{dec}$ Cette tension continue $V_{dc,m}$ est additionnée à la tension de modulation du PM provenant de OL.

Ainsi, la méthode de la figure 4 permet, en choisissant une phase de démodulation appropriée, d'asservir le modulateur de phase PM pour annuler la RAM et asservir la fréquence optique f du faisceau laser LL sur la résonance de la cavité (ou l'inverse) à l'aide d'une détection du rayonnement transmis ou réfléchi par la cavité C sur une même photodiode PDt, PDr. Les problèmes liés à la différence de biréfringence sur le chemin optique qui va vers la photodiode de contrôle de la RAM et le chemin optique utile qui va vers le reste de l'expérience sont donc résolus par la méthode de la figure 4 puisque c'est la même photodiode qui sert à contrôler la RAM. De même, à l'inverse de l'art antérieur, il n'est plus nécessaire de s'assurer que la phase de démodulation utilisée pour générer le signal d'erreur qui sert à verrouiller le laser soit la même que celle que celle utilisée pour annuler la RAM sur la photodiode de contrôle de la RAM.

La figure 7 illustre un autre mode de réalisation de la méthode de la figure 4. Dans ce mode, toutes les étapes sont identiques à celle de la méthode de la figure 4, à l'exception du fait qu'il comprend une étape D1) après l'étape D) et avant l'étape E) consistant à faire varier la fréquence de modulation $f_{mod}$ jusqu'à ce qu'une pente de la fonction SP soit maximale sur la portion P de valeurs, en répétant l'étape D pour chaque fréquence de modulation. Cette étape est mise en œuvre par le processeur UT. Concrètement, cette étape D1 consiste en la maximisation de la pente de la fonction SP par une variation de la fréquence de modulation $f_{mod}$, tout en s'assurant que l'on est toujours à la phase de découplage $\phi_{dec}$, c'est-à-dire en faisant varier de façon itérative la phase de démodulation $\phi_{dem,1}$ afin que la fonction PL présente toujours un plateau sur la portion P. En effet, la variation de la fréquence de modulation induit des variations sur des retards électroniques qui vont modifier la phase de démodulation. L'étape D1 permet donc de définir un couple fréquence de modulation-phase de découplage optimal $(f_{mod,o}; \phi_{dec,o})$ pour laquelle la pente de la fonction SP est maximisée dans sa partie linéaire donc pour lequel l'asservissement est facilité et la sensibilité de mesure de décalage en fréquence par rapport à la résonance est augmentée. En effet, la pente est mesurée en V/Hz, et plus cette pente est grande, plus on sera sensible à une mesure de fréquence (Hz) sur le signal d'erreur (V). En mesurant le signal d'erreur (asservi à zéro mais en pratique jamais égal à zéro) et en multipliant sa valeur par la pente, on retrouve notre décalage en fréquence δv. Avec une pente élevée il est plus facile de discriminer la mesure d'un Hz. Cette méthode ne peut fonctionner qu'avec une détection en transmission, c'est-à-dire une détection à l'aide de la photodiode PDt et $f_{mod} < \Delta f_c/2$. En effet, on peut démontrer que, en réflexion, la fréquence de modulation permettant d'obtenir la pente maximale pour la fonction SP entraine l'annulation de la fonction PL. Il est donc impossible de réaliser un asservissement du PM permettant d'annuler la RAM.

Les figures 8 et 9 illustrent des dispositifs identiques à celui du mode de réalisation de la figure 3 à l'exception du fait que dans ces dispositifs, l'asservissement est réalisé respectivement, sur un modulateur acousto-optique AOM, et sur un étage de translation pièzoélectrique TS sur lequel est fixé un composant de la cavité C. Les deux variantes de fonctionnement en transmission et en réflexion sont ici illustrées sur un même schéma mais il est bien entendu que le dispositif fonctionne avec une seule de ces deux photodiodes.

Dans le mode de réalisation de la figure 8, le dispositif D comprend un modulateur acousto optique AOM adapté pour faire décaler et faire varier la fréquence optique f du faisceau laser LL le traversant afin qu'elle soit comprise dans une résonance de la cavité C. Ce modulateur AOM est un composant connue de l'homme de l'art. Il est placé avant le modulateur de phase PM et après le laser L et est excité à une fréquence $f_{AOM}$ qui est le paramètre permettant de contrôler l'écart δv. Ce dispositif est adapté à mettre en œuvre les méthodes des figures 4 et 7, le processeur UT étant configuré pour asservir l'AOM sur une valeur de la fréquence d'excitation $f_{AOM}$ permettant d'atteindre l'écart nul en maximisant l'intensité détectée sur la photodiode PDt,PDr ou en annulant la fonction SP (étape E)). Cet AOM peut être avantageux, par exemple, afin d'atteindre une fréquence optique du rayonnement laser difficilement atteignable par une simple variation de la tension continue d'alimentation de L. L'AOM est asservi en fréquence contrairement au laser dans l'exemple précédent. L'AOM a une précision qui peut être sub-hertzienne (précision en dessous du Hz) ce qui est très pratique pour des applications de mesures de fréquences asservies.

Dans le mode de réalisation de la figure 9, le dispositif D comprend un étage de translation pièzoélectrique TS sur lequel est fixé un composant de la cavité C. Cet élément peut être par exemple le premier moyen de couplage M1 ou le deuxième moyen de couplage M2 (par exemple des miroirs lasers). L'étage de translation TS est adapté pour faire varier la longueur $L_{car}$ de la cavité en déplaçant un des moyens de couplage relativement à l'autre et ainsi faire varier la fréquence centrale $f_c$ de la résonance (et donc faire varier δv). En effet, dans le cas d'une cavité linéaire, il existe une résonance aux fréquences centrales $f_c = k.\frac{c}{2L_{cav}}$ avec $k \in \mathbb{N}^*$. Dans le cas d'une cavité en anneau, il existe une résonance aux fréquences centrales $f_c = k.\frac{c}{L_{cav}}$, avec $k \in \mathbb{N}^*$. Dans le mode de réalisation de la figure 9, la longueur de cavité est donc le paramètre contrôlant δv. Ce dispositif permet un asservissement de la cavité sur une fréquence optique f du laser (qui peut par exemple être fixe) et est adapté à mettre en œuvre les méthodes des figures 4 et 7. Dans ces méthodes, l'étape E) est mise en œuvre par le processeur UT qui asservit l'étage de translation sur une valeur de la longueur $L_{car}$ de la cavité permettant d'atteindre l'écart nul en maximisant l'intensité détectée sur la photodiode PDt,PDr ou en annulant la fonction SP.

La figure 10 présente un mode de réalisation identique au dispositif de la figure 8 à l'exception du fait que la cavité C est une cavité en anneau et comprend une fibre optique FO. Le premier et le deuxième moyen de couplage M1, M2 sont configurés pour coupler le rayonnement LL injecté dans la cavité avec la fibre optique FO. Dans le mode de réalisation de la figure 10, ces moyens de couplage comprennent chacun un miroir et une lentille. Selon le sens d'injection du faisceau LL dans la cavité C, un moyen est adapté pour focaliser le faisceau dans la fibre et l'autre moyen est adapté pour collimater le faisceau laser en sortie de fibre. Dans l'illustration de la figure 10, et cela à titre d'exemple non limitatif, le sens d'injection du faisceau dans la cavité est anti-horaire. L'agencement des photodiodes PDr et PDt est dépendant du sens d'injection.

Pour un sens d'injection horaire, la position de la voie d'injection (celle qui comprend le laser, l'AOM, le modulateur de phase PM) et la voie de détection en réflexion comprenant la photodiode PDr est inversée par rapport à la disposition de la figure 10. De même, la position de la voie de détection en transmission (celle qui comprend la photodiode PDt), devra être elle aussi déplacée perpendiculairement au faisceau représenté comme sortant de la fibre optique FO par rapport à la disposition illustrée en figure 10.

Dans le cas où la fibre FO est à maintien de polarisation, le dispositif D peut comprendre (comme illustré en figure 10) une lame $\lambda/2$ en entrée et en sortie de la fibre associées à un polariseur entre M1 et M2 afin de fixer l'axe de la polarisation du faisceau au sein de la cavité avec celui de la fibre FO.

Comme les dispositifs selon l'invention présentés précédemment, les photodiodes du dispositif de la figure 10 sont reliées au système de démodulation Dem et les signaux issus de Dem sont traités par le processeur UT qui réalise l'asservissement de la fréquence optique laser sur la cavité C et l'asservissement du PM pour annuler la RAM, selon les méthodes de l'invention.

Dans le mode de réalisation de la figure 10, l'asservissement de la fréquence optique laser est réalisé sur l'AOM par le processeur UT en contrôlant la fréquence d'excitation. Alternativement, selon un autre mode de réalisation, le dispositif ne comprend pas l'AOM et l'asservissement par le processeur UT est un asservissement du laser sur la fréquence de résonance de la cavité (comme dans le dispositif de la figure 3). Un asservissement d'un étage de translation piézoélectrique sur lequel fixé une extrémité de la fibre optique ou un des miroirs de la cavité est aussi possible (comme dans le dispositif de la figure 9).

Alternativement, dans le cas où la cavité est complétement fibré, le premier M1 et le deuxième moyen M2 de couplage comprennent un coupleur fibré, par exemple un coupleur 1x2 permettant d'extraire (ou coupler, selon le sens d'injection) une partie du rayonnement LL compris la cavité (ou vers la cavité, selon le sens d'injection).

Alternativement, selon un autre mode de réalisation, les moyens M1 et M2 peuvent comprendre uniquement un miroir si celui-ci est une parabole hors axe par exemple.

L'avantage d'utiliser une cavité en anneau comme celle du dispositif de la figure 10 est qu'elle permet de réaliser un gyromètre résonant passif. La mesure de la vitesse de rotation dans un gyromètre résonant repose sur le fait que l'intervalle spectral libre d'une cavité résonante est modifié par la rotation de cette dernière (effet Sagnac). Cependant, comme il n'y a pas de milieu à gain dans la cavité résonante passive, la fréquence optique du faisceau laser LL n'a aucune raison de suivre la fréquence dite de résonance de la cavité (multiple entier de l'intervalle spectral libre), qui va être modifiée par la rotation. C'est pourquoi, dans le cas d'un gyromètre résonant, il est nécessaire d'avoir un asservissement du laser ou d'un AOM permettant de suivre la fréquence de résonance de la cavité au cours du temps.

La figure 11 présente un mode de réalisation de l'invention dans lequel le dispositif D comprend une cavité résonante passive en anneau C dans laquelle il est possible d'injecter le faisceau laser selon un premier sens (anti horaire), par une première voie optique F et selon un deuxième sens (horaire), par une deuxième voie optique F'.

Dans le mode de réalisation de la figure 11 le dispositif comprend un séparateur optique LS adapté pour séparer le rayonnement laser LL en la première et la deuxième voie optique. Ce séparateur optique LS peut être une lame séparatrice 50/50 si la propagation du faisceau est en espace libre ou un coupleur 1x2 si la propagation du faisceau est fibré.

La première voie optique comprend le modulateur acousto-optique AOM, le modulateur de phase PM et le circulateur optique CO placé après le modulateur de phase. La deuxième voie optique comprend un modulateur acousto-optique additionnel AOM', un modulateur de phase additionnel PM' et un circulateur optique additionnel CO' placé après le modulateur de phase additionnel.

Les modulateurs PM et PM' modulent la phase à une fréquence imposée par l'oscillateur local OL. Alternativement, selon un autre mode de réalisation, chacune modulateur de phase est modulé à une fréquence qui peut être différente de l'autre, imposée par un oscillateur local associé à ce modulateur. Comme expliqué précédemment, la présence des modulateurs AOM et AOM' sont optionnelles dans le dispositif de la figure 11.

Le circulateur optique CO est adapté pour diriger le rayonnement laser injecté selon le deuxième sens (anti horaire) puis réfléchis par la cavité C vers une photodiode de réflexion additionnelle PDr'. Le circulateur optique additionnel est adapté pour diriger le rayonnement laser injecté selon le premier sens (horaire) puis réfléchi par la cavité C vers la photodiode PDr. Ces circulateurs optique sont typiquement basés sur un rotateur de faraday placé entre deux cube séparateurs de polarisation

Le trajet optique du faisceau laser après la modulation de phase est fibrée dans les deux voies optiques. Dans un exemple donné à titre non limitatif, les fibres optiques placées après le modulateur PM et PM' sont à maintien de polarisation.

Le dispositif de la figure 11 comprend une cavité C identique à celle présentée en figure 10. Dans le dispositif de la figure 11, le trajet optique de la première voie optique et la deuxième voie optique entre respectivement le modulateur de phase PM et la cavité C, et le modulateur de phase additionnel PM' et la cavité C, est en optique guidée, par exemple à l'aide d'une fibre optique à maintien de polarisation ou non, ou encore un guide d'onde planaire.

De plus, le dispositif de la figure 11 comprend un ensemble Ens et un ensemble additionnels Ens', optionnels, et chacun constitué d'une lentille, d'une lame $\lambda/2$ et d'un polariseur. L'ensemble est placé devant la sortie de la fibre injectant le rayonnement laser issu de la première voie optique. L'ensemble additionnel est placé devant la sortie de la fibre injectant le rayonnement laser issu de la deuxième voie optique. Ces ensembles Ens, Ens' permettent de collimater le faisceau et d'imposer une polarisation lors de son entrée dans la cavité.

Le dispositif comprend une photodiode de transmission PDt et une photodiode de transmission additionnelle PDt'. PDt est agencée de manière à détecter le rayonnement injecté selon le premier sens dans la cavité puis transmis par cette dernière. PDt' est agencée de manière à détecter le rayonnement injecté selon le deuxième sens dans la cavité puis transmis par la cavité. Il est entendu que, comme dans la figure 3A, selon une première variante de l'invention le dispositif comprend uniquement les photodiodes de réflexion PDr, PDr' afin d'effectuer l'asservissement de la fréquence optique et l'annulation de la RAM. Alternativement, comme dans la figure 3B, dans une deuxième variante, le dispositif comprend uniquement les photodiodes de transmission PDt, PDt'.

Comme dans les dispositifs selon l'invention présentés précédemment, les photodiodes sont reliées au système de démodulation Dem et les signaux issus de Dem sont traités par le processeur UT qui réalise l'asservissement de la fréquence optique laser sur la cavité C et l'asservissement du PM pour annuler la RAM, selon les méthodes de l'invention.

Dans le mode de réalisation de la figure 11, l'asservissement de la fréquence optique laser est réalisé par le processeur UT sur le laser L en contrôlant la tension continue d'alimentation $V_{dc,L}$. Alternativement, selon un autre mode de réalisation, le dispositif comprend un AOM et l'asservissement par le processeur UT est un asservissement de l'AOM sur la fréquence de résonance de la cavité (comme dans le dispositif de la figure 8) ou encore un asservissement d'un étage de translation piézoélectrique sur lequel fixé une extrémité de la fibre optique ou un des miroirs de la cavité (comme dans le dispositif de la figure 9).

## Annexe

Cette partie démontre la possibilité de gérer l'annulation la RAM et l'asservissement du laser sur la cavité (ou de la cavité sur le laser) à partir d'une seule photodiode. Ensuite, il est démontré qu'il est possible de découpler l'annulation la RAM et l'asservissement du laser sur la cavité (ou de la cavité sur le laser) avec deux phases de démodulation dite phases de découplage à l'aide de signaux d'erreur généré à partir de cette seule photodiode.

On cherche d'abord l'expression mathématique du signal d'erreur.

Comme démontré précédemment, le champ $E_{inj}$ du rayonnement LL transmis par le modulateur de phase PM et incident sur la cavité C après la traversée des composants biréfringents est de la forme (voir figure 2 et Equation 1) :

$$E_{inj} = E_0 e^{i\omega t} e^{i\frac{\phi_s+\phi_f}{2}} \left[ |b'|\, e^{i(\phi_3+\phi_{b'})} + |a'|\, e^{i(\phi_2+\phi_{a'})} \right] \overrightarrow{\gamma'}$$

$$= E_0 e^{i\omega t}\left(|a'| e^{i\phi'_o} e^{i\delta_o \sin\omega_{mod}t} + |b'| e^{i\phi'_e} e^{i\delta_e \sin\omega_{mod}t}\right),$$

avec $\phi_{2,3} + \phi_{b',a'} = \phi_{o,e} + \phi_{o,e}^{dc} + \delta_{o,e}\sin\omega_{mod}t + \phi_{b',a'} = \phi'_{o,e} + \delta_{o,e}\sin\omega_{mod}t$ et

$$\phi'_{o,e} = \phi_{o,e} + \phi_{o,e}^{dc} + \phi_{a',b'}$$

donc en développant en harmoniques de la fréquence de modulation:

$$E_{inj} = E_0 \sum_{k=-\infty}^{+\infty} \left(|a'| e^{i\phi'_o} J_k(\delta_o) + |b'| e^{i\phi'_e} J_k(\delta_e)\right) e^{i(\omega+k\omega_{mod})t} =$$

$$E_0 e^{i\omega t} \sum_{k=-\infty}^{+\infty} j_k e^{ik\omega_{mod}t}$$

*avec* $j_k = |a'| e^{i\phi'_o} J_k(\delta_o) + |b'| e^{i\phi'_e} J_k(\delta_e)$ vérifiant $j_{-k} = (-1)^k j_k$

Le champ réfléchi, $E_r$, ou transmis, $E_t$, par la cavité après modulation de la phase du faisceau laser LL par PM à

une fréquence $\omega_{mod}$ s'écrit :

$$E_{r,t} = E_0 \sum_{k=-\infty}^{+\infty} j_k F(\omega + k\omega_{mod})\, e^{i(\omega + k\omega_{mod})t}$$

Avec *F(w)* la fonction de transfert en transmission ou en réflexion de la cavité.

L'intensité réfléchie, $I_r$, ou transmise, $I_t$, par la cavité s'écrit :

$$I_{r,t} = I_0 \sum_{k=-\infty}^{+\infty} \sum_{p=-\infty}^{+\infty} j_k\, \overline{j_p}\, F(\omega + k\omega_{mod}) \overline{F(\omega + p\omega_{mod})}\, e^{i(k-p)\omega_{mod}t},$$

avec $I_0$ l'intensité initiale à l'entrée du modulateur de phase.

Si on ne regarde que les composantes fréquentielles (sidebands) à plus ou moins la fréquence de modulation $\pm\omega_{mod}$, on ne garde que les termes p=k+1 ou p = k-1 soit :

$$I_{r,t} = \mathrm{I}_0 \sum_{k=0}^{+\infty} \left[ -j_{k+1} \overline{j_k}\, F(\omega - (k+1)\omega_{mod}) \overline{F(\omega - k\,\omega_{mod})} \right.$$
$$\left. + j_k \overline{j_{k+1}}\, F(\omega + k\omega_{mod}) \overline{F(\omega + (k+1)\omega_{mod})} \right] e^{-i\omega_{mod}t}$$
$$+ \mathrm{I}_0 \sum_{k=0}^{+\infty} \left[ -\overline{j_{k+1}}\, j_k\, \overline{F(\omega - (k+1)\omega_{mod})}\, F(\omega - k\omega_{mod}) \right.$$
$$\left. + \overline{j_k}\, j_{k+1}\, \overline{F(\omega + k\omega_{mod})} F(\omega + (k+1)\omega_{mod}) \right] e^{i\omega_{mod}t}$$

On pose :

$$A_{k,k+1} = j_k\, \overline{j_{k+1}}$$
$$= \left( |a'| e^{i\phi'_o} J_k(\delta_o) + |b'| e^{i\phi'_e} J_k(\delta_e) \right) \left( |a'| e^{-i\phi'_o} J_{k+1}(\delta_o) \right.$$
$$\left. + |b'| e^{-i\phi'_e} J_{k+1}(\delta_e) \right)$$
$$= |a|^2 J_k(\delta_0) J_{k+1}(\delta_0) + |b|^2 J_k(\delta_e) J_{k+1}(\delta_e)$$
$$+ |a'||b'| \left( e^{i(\phi'_e - \phi'_o)} J_k(\delta_e) J_{k+1}(\delta_0) + e^{-i(\phi'_e - \phi'_o)} J_k(\delta_o) J_{k+1}(\delta_e) \right)$$
$$= |a|^2 J_k(\delta_0) J_{k+1}(\delta_0) + |b|^2 J_k(\delta_e) J_{k+1}(\delta_e)$$
$$+ |a||b| \left[ J_k(\delta_e) J_{k+1}(\delta_0) + J_k(\delta_o) J_{k+1}(\delta_e) \right] cos(\Delta\phi)$$
$$- i\, |a||b| \left[ J_k(\delta_o) J_{k+1}(\delta_e) - J_k(\delta_e) J_{k+1}(\delta_0) \right] sin(\Delta\phi)$$

Avec

$$\Delta\Phi = \phi'_e - \phi'_o + \phi_{a'} - \phi_{b'}$$

Et

$$b_k = A_{k,k+1} \cdot F(w + kw_{mod}) \overline{F(w + (k+1)w_{mod})} - \overline{A_{k,k+1}} \cdot \overline{F(w - k\,w_{mod})} F(w - (k+1)w_{mod})$$

En démodulant ce signal avec le système de démodulation par un signal de la forme *cos($\omega_{mod}t + \varphi_{dem}$)*, puis un filtrage passé bas pour ne garder que la composante continue on a un signal d'erreur $V_\varepsilon$ de la forme suivante :

$V_\varepsilon = G_{tot}\langle I_{r,t} \cdot \sin(\omega_{mod}t + \varphi dem)\rangle$, avec *Gtot=GPD.Gmixeur.Gfiltre* un terme qui regroupe les gains des différents composants, la photodiode, le mélangeur de signaux et le filtre passe bas.

La forme générale du signal d'erreur est (Equation 2)

$$V_\epsilon = G_{tot} I_o \cdot \sum_{k=0}^{+\infty} Re(b_k)\, cos(\varphi_{dem}) + Im(b_k)\, sin(\varphi_{dem})$$

On reprend l'expression du signal d'erreur $V_\varepsilon$ dérivée de l'Equation 2 en limitant la somme aux p premiers termes:

$$V_\varepsilon(\Delta\Phi, \nu) = G_{tot} I_o \cdot \sum_{k=0}^{p} [Re(b_k)\cos(\varphi_{dem}) + Im(b_k)\sin(\varphi_{dem})]$$

$$b_k(\Delta\Phi, \nu) \equiv b_{k,1}(\Delta\Phi, \nu)$$

$$= A_{k,k+1}(\Delta\Phi, \nu) F(\nu + kf_{mod}) \overline{F(\nu + (k+1)f_{mod})} - A_{k+1,k}(\Delta\Phi, \nu)\, F(\nu - (k+1)f_{mod}) \overline{F(\nu - kf_{mod})}$$

$$= A_k(\Delta\Phi, \nu) F(\nu + kf_{mod}) \overline{F(\nu + (k+1)f_{mod})} - \overline{A_k(\Delta\Phi, \nu)}\, F(\nu - (k+1)f_{mod}) \overline{F(\nu - kf_{mod})}$$

Avec

$$A_k(\Delta\Phi, \nu) \equiv A_{k,k+1}$$

Dans la suite, on prendra $G_{rot} I_o = 1$ afin d'alléger les notations. On utilise simplement la propriété $F_{r,t}(\nu_0 - \delta\nu) = \overline{F_{r,t}(\nu_0 + \delta\nu)}$ (démontrable) de la fonction de transmission *Ft* ou de réflexion $F_r$ en amplitude quand $\delta\nu$ est l'écart en fréquence par rapport à une résonnance $\nu_0$ de la cavité C.

$$b_k(\Delta\Phi, \nu_0) = A_k(\Delta\Phi, \nu_0) \cdot F(\nu_0 + kf_{mod}) \cdot \overline{F(\nu_0 + (k+1)f_{mod})} - \overline{A_k}(\Delta\Phi, \nu_0) \cdot F(\nu_0 - (k+1)f_{mod}) \cdot \overline{F(\nu_0 - kf_{mod})}$$

$$b_k(\Delta\Phi, \nu_0) = A_k(\Delta\Phi, \nu_0) \cdot F(\nu_0 + kf_{mod}) \cdot F(\nu_0 - (k+1)f_{mod}) - \overline{A_k}(\Delta\Phi, \nu_0) \cdot F(\nu_0 - (k+1)f_{mod}) \cdot F(\nu_0 + kf_{mod})$$

On a alors (Equation 3):

On a alors (Equation 3) : $b_k(\Delta\Phi, \nu_0) = \left(A_k(\Delta\Phi, \nu_0) - \overline{A_k}(\Delta\Phi, \nu_0)\right) \cdot F(\nu_0 + kf_{mod}) \cdot F(\nu_0 - (k+1)f_{mod}) = 2iIm\left(A_k(\Delta\Phi, \nu_0)\right) \cdot F(\nu_0 + kf_{mod}) \cdot F(\nu_0 - (k+1)f_{mod})$

On veut que soit nul à résonance même avec de la RAM. Il faut donc annuler simultanément tous les $b_k(\nu)$ donc tous les $Im(A_k(\Delta\Phi,\nu_0))$ ce qui est possible avec $sin(\Delta\Phi) = 0$ (voir expression de $A_k$).

On remarque que la condition « être à résonance ($\delta\nu = \nu - \nu_0 = 0$) avec $sin(\Delta\Phi) = 0$ » est indépendante de la phase de démodulation. Si les coefficients $b_k(\Delta\Phi, \nu_0)$ sont nuls, le signal d'erreur $V_\varepsilon(\Delta\Phi, \nu)$ est nul pour n'importe quelle phase de démodulation.

Il faut maintenant prouver qu'il existe des signaux d'erreur permettant de contrôler $\Delta\Phi$ et de verrouiller la fréquence du laser à une résonance de la cavité. En effet, rien ne garantit qu'on ne peut pas avoir une situation dans laquelle on aurait $sin(\Delta\Phi) \neq 0$ et $\delta\nu \neq 0$ et pourtant avoir $b_k(\Delta\Phi, \nu)$ nul, c'est à dire que par malchance les défauts de l'asservissement du modulateur de phase compenserait une erreur de verrouillage sur une résonnance de la cavité. Dans la suite, on montre donc qu'être à résonance avec $sin(\Delta\Phi) = 0$ est une condition nécessaire et suffisante pour avoir $b_k(\Delta\Phi,\upsilon)$ nul.

Le but du calcul exposé ci-après est de montrer que seul la condition « être à résonance (écart $\delta\nu = 0$) et $sin(\Delta\Phi) = 0$ » permet d'avoir $b_k(\Delta\Phi,\upsilon)$ nul. On suppose que la fréquence du laser $\nu_0 + \delta\nu$ et la phase $\Delta\Phi_0 + \delta\Delta\Phi$ peuvent varier autour de leurs valeurs asservies $\delta\Delta\Phi = 0$ et $\delta\nu = 0$ soit $b_k(sin(\Delta\Phi_0) = 0, \nu_o) = 0$ (voir Equation 3). On cherche à savoir s'il est possible d'avoir, au voisinage cette situation, d'autres couples de valeurs ($\Delta\Phi$, $\delta\nu$) tels que tous les coefficients $b_k = 0$ soit nuls aussi.

On rappelle que les coefficients $F_k$ ne dépendent que des caractéristiques de la cavité et sont indépendants de $\Delta\Phi$. On utilisera les propriétés de symétries autour d'une fréquence de résonance $\nu_0$, valables en transmission comme en réflexion :

$$F_t(\nu_0 - \delta\upsilon) = \overline{F_t(\nu_0 + \delta\upsilon)} \quad \text{et} \quad \frac{dF_t}{d\upsilon}(\nu_0 - \delta\upsilon) = -\overline{\frac{dF_t}{d\upsilon}(\nu_0 + \delta\upsilon)}$$

On a alors :

$$b_k(\Delta\Phi + \delta\Delta\Phi, \nu_0 + \delta\nu) = b_k(sin(\Delta\Phi), \nu_0) + \delta\nu \left.\frac{db_k}{d\nu}\right|_{\nu_0} + \delta\Delta\Phi \frac{db_k}{d\Delta\Phi}$$

avec $b_k(\Delta\Phi, \nu_0)$ (voir Equation 3) :

$$\begin{aligned} b_k(\Delta\Phi, \nu_0) &= A_k(\Delta\Phi, \nu_0) F(\nu_0 + kf_{mod}) \overline{F(\nu_0 + (k+1)f_{mod})} \\ &\quad - \overline{A_k(\Delta\Phi, \nu_0)}\, F(\nu_0 - (k+1)f_{mod})\, \overline{F(\nu_0 - kf_{mod})} \\ &= -2\, Im\left(A_k(\Delta\Phi, \nu_0)\right)(q_k - ip_k) \end{aligned}$$

En posant :

$$p_k + i\, q_k = F(\nu_0 - (k+1)f_{mod})\, \overline{F(\nu_0 - kf_{mod})} = F(\nu_0 + kf_{mod}) F(\nu_0 - (k+1)f_{mod})$$

On a alors :

$$\frac{db_k}{d\Delta\Phi} = \frac{dA_k(\Delta\Phi,\nu_0)}{d\Delta\Phi} F(\nu_0 + kf_{mod}) \cdot \overline{F(\nu_0 + (k+1)f_{mod})} - \frac{d\overline{A_k(\Delta\Phi,\nu_0)}}{d\Delta\Phi} F(\nu_0 - (k+1)f_{mod}) \cdot \overline{F(\nu_0 - kf_{mod})}$$

$$= \frac{dA_k(\Delta\Phi,\nu_0)}{d\Delta\Phi} F(\nu_0 + kf_{mod}) \cdot F(\nu_0 - (k+1)f_{mod}) - \frac{d\overline{A_k(\Delta\Phi,\nu_0)}}{d\Delta\Phi} F(\nu_0 - (k+1)f_{mod}) \cdot F(\nu_0 + kf_{mod})$$

$$= 2i\, Im\left(\frac{dA_k(\Delta\Phi,\nu_0)}{d\Delta\Phi}\right) F(\nu_0 + kf_{mod}) \cdot F(\nu_0 - (k+1)f_{mod})$$

$$= -2i\,|a||b|\,[J_k(\delta_o)J_{k+1}(\delta_e) - J_k(\delta_e)J_{k+1}(\delta_0)]\,[p_k + i\,q_k]\,cos(\Delta\Phi,\nu_0)$$

$$= 2\,|a||b|\,[J_k(\delta_o)J_{k+1}(\delta_e) - J_k(\delta_e)J_{k+1}(\delta_0)]\,[q_k - i\,p_k]\,cos(\Delta\Phi,\nu_0)$$

Le terme $\left.\frac{db_k}{d\nu}\right|_{\nu_0}$ est la somme de deux termes, le premier, $\left(\left.\frac{db_k}{d\nu}\right|_{\nu_0}\right)_1$, décrivant la variation de $db_k$ due à une variation de la fréquence optique ν via la réponse de la cavité et le deuxième, $\left(\left.\frac{db_k}{d\nu}\right|_{\nu_0}\right)_2$, décrivant la variation de $db_k$ due à une variation de la fréquence optique ν via la réponse du modulateur de phase soit

$$\left.\frac{db_k}{d\nu}\right|_{\nu_0} = \left(\left.\frac{db_k}{d\nu}\right|_{\nu_0}\right)_1 + \left(\left.\frac{db_k}{d\nu}\right|_{\nu_0}\right)_2$$

$$\left(\left.\frac{db_k}{d\nu}\right|_{\nu_0}\right)_1 = A_k(\Delta\Phi,\nu_0) \cdot \frac{d}{d\nu}\left(F(\nu_0 + kf_{mod}) \cdot \overline{F(\nu_0 + (k+1)f_{mod})}\right)$$

$$-\overline{A_k(\Delta\Phi,\nu_0)} \cdot \frac{d}{d\nu}\left(F(\nu_0 - (k+1)f_{mod}) \cdot \overline{F(\nu_0 - kf_{mod})}\right)$$

et

$$\left(\left.\frac{db_k}{d\nu}\right|_{\nu_0}\right)_2 = \frac{dA_k(\Delta\Phi,\nu_0)}{d\Delta\Phi} \left.\frac{d\Delta\Phi}{d\nu}\right|_{\nu_0} F(\nu_0 + kf_{mod}) \cdot \overline{F(\nu_0 + (k+1)f_{mod})}$$

$$-\frac{d\overline{A_k(\Delta\Phi,\nu_0)}}{d\Delta\Phi} \left.\frac{d\Delta\Phi}{d\nu}\right|_{\nu_0} F(\nu_0 - (k+1)f_{mod}) \cdot \overline{F(\nu_0 - kf_{mod})}$$

On a

$$\left(\frac{db_k}{d\nu}\bigg|_{\nu_0}\right)_1 =$$

$$= A_k(\Delta\Phi)\frac{dF(\nu_0 + kf_{mod})}{d\nu}\,\overline{F(\nu_0 + (k+1)f_{mod})} + A_k(\Delta\Phi)F(\nu_0 + kf_{mod})\frac{d\overline{F(\nu_0 + (k+1)f_{mod})}}{d\nu}$$

$$-\overline{A_k(\Delta\Phi)}\,\frac{dF(\nu_0 - (k+1)f_{mod})}{d\nu}\,\overline{F(\nu_0 - kf_{mod})}$$

$$-\,\overline{A_k(\Delta\Phi)}\,F(\nu_0 - (k+1)f_{mod})\frac{d\overline{F(\nu_0 - kf_{mod})}}{d\nu}$$

$$= A_k(\Delta\Phi)\frac{dF(\nu_0 + kf_{mod})}{d\nu}\,F(\nu_0 - (k+1)f_{mod}) - A_k(\Delta\Phi)F(\nu_0 + kf_{mod})\frac{dF(\nu_0 - (k+1)f_{mod})}{d\nu}$$

$$-\overline{A_k(\Delta\Phi)}\frac{dF(\nu_0 - (k+1)f_{mod})}{d\nu}F(\nu_0 + kf_{mod}) \;+ \overline{A_k(\Delta\Phi)}\,F(\nu_0 - (k+1)f_{mod})\frac{dF(\nu_0 + kf_{mod})}{d\nu}$$

$$= \left[A_k(\Delta\Phi) + \overline{A_k(\Delta\Phi)}\right]\left[F(\nu_0 - (k+1)f_{mod})\frac{dF(\nu_0 + kf_{mod})}{d\nu} - F(\nu_0 + kf_{mod})\frac{dF(\nu_0 - (k+1)f_{mod})}{d\nu}\right]$$

$$= -2\left(F(\nu_0 + kf_{mod})\frac{dF}{d\nu}\bigg|_{\nu_0-(k+1)f_{mod}} - F(\nu_0 - (k+1)f_{mod})\frac{dF}{d\nu}\bigg|_{\nu_0+kf_{mod}}\right)Re\big(A_k(\Delta\Phi)\big)$$

et

$$\left(\frac{db_k}{d\nu}\bigg|_{\nu_0}\right)_2 =$$

$$= \frac{dA_k(\Delta\Phi)}{d\Delta\Phi}\frac{d\Delta\Phi}{d\nu}F(\nu_0 + kf_{mod})\cdot\overline{F(\nu_0 + (k+1)f_{mod})} - \frac{d\overline{A_k(\Delta\Phi)}}{d\Delta\Phi}\,\frac{d\Delta\Phi}{d\nu}F(\nu_0 - (k+1)f_{mod})\cdot\overline{F(\nu_0 - kf_{mod})}$$

$$= \left[\frac{dA_k(\Delta\Phi)}{d\Delta\Phi}F(\nu_0 + kf_{mod})\cdot F(\nu_0 - (k+1)f_{mod}) - \frac{d\overline{A_k(\Delta\Phi)}}{d\Delta\Phi}\,F(\nu_0 - (k+1)f_{mod})\cdot F(\nu_0 + kf_{mod})\right]\frac{d\Delta\Phi}{d\nu}$$

$$= 2i\,Im\left(\frac{dA_k(\Delta\Phi)}{d\Delta\Phi}\right)F(\nu_0 + kf_{mod})\cdot F(\nu_0 - (k+1)f_{mod})\frac{d\Delta\Phi}{d\nu}$$

Pour obtenir ce résultat, nous avons fait l'hypothèse que les profondeurs de modulations $\delta_{o,e} = -\frac{\pi l}{\lambda d} r_{o,e} n_{o,e}^3 V_{RF}$ évoluaient peu avec l'écart δv puisque $\frac{d\delta_{o,e}}{d\nu} = -\frac{\pi l}{cd} r_{o,e} n_{o,e}^3 V_{RF} = \frac{\delta_{o,e}}{\nu}$ et que les $\delta_{o,e}$ valent au mieux quelques radians. Cela implique que $\frac{d\delta_{o,e}}{d\nu}$ est de l'ordre de $10^{-14}$.

On a donc

$$\left(\frac{db_k}{d\nu}\bigg|_{\nu_0}\right)_2 = 2\,|a||b|\,[J_k(\delta_o)J_{k+1}(\delta_e) - J_k(\delta_e)J_{k+1}(\delta_0)]\,[q_k - i\,p_k]\,cos(\Delta\Phi)\frac{d\Delta\Phi}{d\nu}$$

$$= \frac{db_k}{d\Delta\Phi}\cdot\frac{d\Delta\Phi}{d\nu}$$

Le terme $\left(\frac{db_k}{d\nu}\Big|_{\nu_0\ résonance}\right)_2$ peut être négligé par rapport à $\left(\frac{db_k}{d\nu}\Big|_{\nu_0\ résonance}\right)_1$. En effet, ΔΦ est proche de (2k + 1) π/2 et étant un terme de phase, il est proportionnel à la fréquence optique ν soit $\Delta\Phi = \alpha\nu$ et $\frac{d\Delta\Phi}{d\nu}\Big|_{\Delta\Phi_0} = \alpha = \frac{\Delta\Phi_0}{\nu}$. Si on suppose que l'on se propage sur 10 m et que la biréfringence est telle qu'on accumule un déphasage de 2π tous les λ alors on accumule, à 1.55 μm, $4\cdot10^6$ rads soit $\frac{d\Delta\Phi}{d\nu}\Big|_{\Delta\Phi_0} \approx 2\cdot10^{-8}$ alors que le terme multiplicatif $2\,|a||b|[J_k(\delta_0)J_{k+1}(\delta_e)-J_k(\delta_e)J_{k+1}(\delta_0)]\,[q_k-ip_k]$ peut être majoré en prenant $|a| = |b| = 1, J_k(\delta_o)J_{k+1}(\delta_e) = J_0^2(0) = 1, J_k(\delta_e)J_{k+1}(\delta_0) = 0, F(\nu_0 + kf_{mod})\cdot$ $F(\nu_0 - (k+1)$ $f_{mod}) = 1$ soit $2\,|a||b|\,[J_k(\delta_o)J_{k+1}(\delta_e)\ -J_k(\delta_e)J_{k+1}(\delta_0)]\ q_k - i\,p_k \leq 2$

On a donc (Equation 4) :

$$db_k = \delta\nu\frac{db_k}{d\nu} + \delta\Delta\Phi\frac{db_k}{d\Delta\Phi}$$
$$= 2\,|a||b|\,[J_k(\delta_o)J_{k+1}(\delta_e) - J_k(\delta_e)J_{k+1}(\delta_0)]\,[q_k - i\,p_k]\,cos(\Delta\Phi)\,\delta\Delta\Phi - 2K_k\cdot Re(A_k)\cdot\ \delta\nu$$

en utilisant $p_k + i\,q_k = F(\nu_0 + kf_{mod})\overline{F(\nu_0 - (k+1)f_{mod})}$,

$$K_k = F(\nu_0 + kf_{mod})\frac{dF}{d\nu}\Big|_{\nu_0-(k+1)f_{mod}} - F(\nu_0 - (k+1)f_{mod})\frac{dF}{d\nu}\Big|_{\nu_0+kf_{mod}}$$

$A_k(\Delta\Phi) = |a|^2J_k(\delta_0)J_{k+1}(\delta_0) + |b|^2J_k(\delta_e)J_{k+1}(\delta_e) + |a||b|\,[J_k(\delta_e)J_{k+1}(\delta_0) + J_k(\delta_o)J_{k+1}(\delta_e)]\,cos(\Delta\Phi) - i|a||b|\,[J_k(\delta_o)J_{k+1}(\delta_e) - J_k(\delta_e)J_{k+1}(\delta_0)]\,sin(\Delta\Phi)$

Ce qui donne (Equation 5):

$$b_k = -2\,Im\big(A_k(\Delta\Phi,\nu_0)\big)(q_k - ip_k) - 2K_k\cdot Re(A_k)\cdot\ \delta\nu$$

En démodulant le signal d'erreur à une première phase de démodulation $\varphi_{dem1}$ et une deuxième phase de démodulation $\varphi_{dem2}$ comme dans les méthodes de l'invention, on obtient le signal d'erreur 1 $V\varepsilon_1$ et le signal d'erreur 2 $V\varepsilon_2$ tel que :

$$V_{\varepsilon1} = G_{tot}I_o\cdot\sum_{k=0}^{+\infty}[Re(b_k)\cos(\varphi_{demod1}) + Im(b_k)\sin(\varphi_{demod1})]$$

$$V_{\varepsilon2} = G_{tot}I_o\cdot\sum_{k=0}^{+\infty}[Re(b_k)\cos(\varphi_{demod2}) + Im(b_k)\sin(\varphi_{demod2})]$$

On cherche à savoir s'il est possible d'avoir un couple $(\delta\Delta\Phi, \delta\nu)$ de valeurs non nulles conduisant à

$$\begin{cases} V_{\epsilon_1} = \cos(\varphi_{demod1}) \sum_{k=0}^{p} Re(b_k) + \sin(\varphi_{demod1}) \sum_{k=0}^{p} Im(b_k) = 0 \\ V_{\epsilon_2} = \cos(\varphi_{demod2}) \sum_{k=0}^{p} Re(b_k) + \sin(\varphi_{demod2}) \sum_{k=0}^{p} Im(b_k) = 0 \end{cases}$$

Si les phases de démodulations sont choisies pour que le déterminant du système, *det1* = $\cos(\phi_{demod1}) \sin(\phi_{demod2}) - \sin(\phi_{demod1}) \cos(\phi_{demod2})$, ne soit pas nul (condition A) alors la seule solution est :

$$\begin{cases} \sum_{k=0}^{p} Re(b_k) = \sum_{k=0}^{p} Re\big(b_k(\Delta\Phi_0 + \delta\Delta\Phi, \nu_0 + \delta\nu)\big) = 0 \\ \sum_{k=0}^{p} Im(b_k) = \sum_{k=0}^{p} Im\big(b_k(\Delta\Phi_0 + \delta\Delta\Phi, \nu_0 + \delta\nu)\big) = 0 \end{cases} \quad \text{soit} \quad \begin{cases} \sum_{k=0}^{p} Re(db_k) = 0 \\ \sum_{k=0}^{p} Im(db_k) = 0 \end{cases}$$

car

$$\sum_{k=0}^{p} Re\big(b_k(\Delta\Phi_0, \nu_0)\big) = 0 \text{ et } \sum_{k=0}^{p} Im\big(b_k(\Delta\Phi_0, \nu_0)\big) = 0.$$

On cherche donc les solutions de

$$\begin{cases} \sum_{k=0}^{p} Re(db_k) = 2\delta\Delta\Phi \cos(\Delta\Phi_0) \sum_{k=0}^{p} |a||b| \, [J_k(\delta_o)J_{k+1}(\delta_e) - J_k(\delta_e)J_{k+1}(\delta_0)] \, q_k - 2\delta\nu \sum_{k=0}^{p} Re(A_k)Re(K_k) = 0 \\ \sum_{k=0}^{p} Im(db_k) = -2\delta\Delta\Phi \cos(\Delta\Phi_0) \sum_{k=0}^{p} |a||b| \, [J_k(\delta_o)J_{k+1}(\delta_e) - J_k(\delta_e)J_{k+1}(\delta_0)] \, p_k - 2\delta\nu \sum_{k=0}^{p} Re(A_k)Im(K_k) = 0 \end{cases}$$

$$\begin{cases} \delta\Delta\Phi \cos(\Delta\Phi_0) \, |a||b| \sum_{k=0}^{p} [J_k(\delta_o)J_{k+1}(\delta_e) - J_k(\delta_e)J_{k+1}(\delta_0)] \, q_k - \delta\nu \sum_{k=0}^{p} Re(A_k)Re(K_k) = 0 \\ \delta\Delta\Phi \cos(\Delta\Phi_0) \, |a||b| \sum_{k=0}^{p} [J_k(\delta_o)J_{k+1}(\delta_e) - J_k(\delta_e)J_{k+1}(\delta_0)] \, p_k + \delta\nu \sum_{k=0}^{p} Re(A_k)Im(K_k) = 0 \end{cases}$$

La seule solution de ce système est ($\delta\Delta\Phi = 0, \delta\nu = 0$) car le déterminant du système est non nul. On a donc bien prouvé que ($\delta\Delta\Phi = 0$, $\delta\nu = 0$) est alors la seule solution atteinte quand les asservissements ont convergé.

Parmi le choix d'un couple de phases de démodulation, le choix de deux phases en quadratures garantit que le déterminant det1 ne soit pas nul puisqu'il vaut 1.

$\cos(\varphi_{demod1}) \sin(\varphi_{demod2}) - \sin(\varphi_{demod1}) \cos(\varphi_{demod2}) = \cos(\varphi_{demod}) \sin(\varphi_{demod} + \pi/2) - \sin(\varphi_{demod} + \pi/2) \cos(\varphi_{demod}) = \cos^2(\varphi_{demod}) + \sin^2(\varphi_{demod} + \pi/2) = 1$

Dans la suite, on va garder de choix de deux phases en quadratures car il permet de dériver des formules analytiques. Nous allons montrer qu'il est possible de décorréler les signaux d'asservissement, en régime transitoire. On montre qu'on peut atteindre la condition $\delta\nu = 0$ indépendamment de la condition $\sin(\Delta\Phi) = 0$ ce qui rend en fait le système insensible à la RAM. On pourrait donc supposer qu'il ne sert à rien de supprimer la RAM. Le problème, c'est que cette phase de démodulation de découplage peut varier sous l'influence de variations des conditions expérimentales. Par exemple, cette phase démodulation peut varier si les retards optiques et électriques varient par exemple à cause de la température. Il est donc nécessaire de supprimer la RAM pour s'en affranchir. On montrera aussi que l'on peut atteindre la condition $\sin(\Delta\Phi) = 0$ indépendamment de la condition $\delta\nu = 0$ ceci afin que le signal appliqué pour contrôler la RAM ne contienne aucune composante due à la dérive du laser.

On cherche maintenant à avoir un des deux signaux d'erreur $V\varepsilon_1$ ou $V\varepsilon_2$ qui évolue peu (idéalement pas du tout) lorsque la RAM change autour de la valeur asservie $sin(\Delta\Phi) = 0$. Ainsi, si le contrôle de la RAM se décale par rapport à cette valeur idéale, par exemple avec un mauvais fonctionnement de son asservissement, au premier ordre cela n'affecte pas la valeur de ce signal d'erreur dont nous allons montrer qu'il peut être utilisé pour verrouiller le laser et la cavité. Ainsi, ce signal d'erreur présente deux propriétés particulières : proche d'une valeur telle que $sin(\Delta\Phi) = 0$, il est indépendant d'une fluctuation de la RAM mais il dépend linéairement de l'écart de fréquence $\delta\nu$ entre le laser et une résonance de la cavité.

On cherche donc deux phases de démodulation $\varphi_{demod}$ et $\varphi_{demod} + \pi/2$ telles que le signal utilisé pour asservir la cavité, $V_{\varepsilon 1}$ ou $V_{\varepsilon 2}$, ne dépend pas ou peu d'une variation de la RAM, lorsque le laser est à résonance avec la cavité ($\nu_o = pc/L_{opt}, \Delta\Phi = (k + 1)\pi$), soit $\left.\frac{dV_{\varepsilon 1,2}}{d\Delta\Phi}\right| = 0$ soit

$$\frac{dV_{\varepsilon 1}}{d\Delta\Phi} = \frac{d}{d\Delta\Phi}\left(cos(\varphi_{demod})\sum_{k=0}^{p} Re(b_k) + sin(\varphi_{demod})\sum_{k=0}^{p} Im(b_k)\right) = 0$$

ou

$$\frac{dV_{\varepsilon 2}}{d\Delta\Phi} = \frac{d}{d\Delta\Phi}\left(-sin(\varphi_{demod})\sum_{k=0}^{p} Re(b_k) + cos(\varphi_{demod})\sum_{k=0}^{p} Im(b_k)\right) = 0$$

soit

$$\text{(C)}\quad cos(\varphi_{demod})\frac{d}{d\Delta\Phi}\left(\sum_{k=0}^{p} Re(b_k)\right) + sin(\varphi_{demod})\frac{d}{d\Delta\Phi}\left(\sum_{k=0}^{p} Im(b_k)\right) = 0$$

ou

$$\text{(D)}\quad -sin(\varphi_{demod})\frac{d}{d\Delta\Phi}\left(\sum_{k=0}^{p} Re(b_k)\right) + cos(\varphi_{demod})\frac{d}{d\Delta\Phi}\left(\sum_{k=0}^{p} Im(b_k)\right) = 0$$

Comme (voir Equation 5)

$$b_k(sin(\Delta\Phi_0) = 0 + \delta\Delta\Phi, \nu_0\ résonance) = -2\,|a||b|\,[J_k(\delta_o)J_{k+1}(\delta_e) - J_k(\delta_e)J_{k+1}(\delta_0)]\,F(\nu_0 + kf_{mod})F(\nu_0 - (k+1)f_{mod})\,\delta\Delta\Phi\,\boldsymbol{i}$$

**L'équation** (C) conduit à (comme les coefficients $J_k(\delta_o)$, $J_{k+1}(\delta_e)$, $J_k(\delta_e)$, $J_{k+1}(\delta_0)$ sont réels)

$$\cos(\varphi_{demod})\, Im\left(\sum_{k=0}^{p}[J_k(\delta_o)J_{k+1}(\delta_e) - J_k(\delta_e)J_{k+1}(\delta_0)]\, F(\nu_0 + kf_{mod})F(\nu_0 - (k+1)f_{mod})\right) = \sin(\varphi_{demod})\, Re\left(\sum_{k=0}^{p}[J_k(\delta_o)J_{k+1}(\delta_e) - J_k(\delta_e)J_{k+1}(\delta_0)]\, F(\nu_0 + kf_{mod})F(\nu_0 - (k+1)f_{mod})\right)$$

La phase de démodulation recherchée est donc donnée par

$$\varphi_{demod1} = \arg\left(\sum_{k=0}^{p}[J_k(\delta_o)J_{k+1}(\delta_e) - J_k(\delta_e)J_{k+1}(\delta_0)]\, F(\nu_0 + kf_{mod})F(\nu_0 - (k+1)f_{mod})\right) + \mathrm{p}\pi$$

L'équation (D) conduit à

$$-\sin(\varphi_{demod})\, Im\left(\sum_{k=0}^{p}[J_k(\delta_o)J_{k+1}(\delta_e) - J_k(\delta_e)J_{k+1}(\delta_0)]\, F(\nu_0 + kf_{mod})F(\nu_0 - (k+1)f_{mod})\right) = \cos(\varphi_{demod})\, Re\left(\sum_{k=0}^{p}[J_k(\delta_o)J_{k+1}(\delta_e) - J_k(\delta_e)J_{k+1}(\delta_0)]\, F(\nu_0 + kf_{mod})F(\nu_0 - (k+1)f_{mod})\right)$$

La phase de démodulation recherchée est donc donnée par

$$\tan(\varphi_{demod}) = -\frac{Re\left(\sum_{k=0}^{p}[J_k(\delta_o)J_{k+1}(\delta_e) - J_k(\delta_e)J_{k+1}(\delta_0)]\, F(\nu_0 + kf_{mod})F(\nu_0 - (k+1)f_{mod})\right)}{Im\left(\sum_{k=0}^{p}[J_k(\delta_o)J_{k+1}(\delta_e) - J_k(\delta_e)J_{k+1}(\delta_0)]\, F(\nu_0 + kf_{mod})F(\nu_0 - (k+1)f_{mod})\right)}$$

soit

$$\varphi_{demod2} = arg\left(\sum_{k=0}^{p}[J_k(\delta_o)J_{k+1}(\delta_e) - J_k(\delta_e)J_{k+1}(\delta_0)]\, F(\nu_0 + kf_{mod})F(\nu_0 - (k+1)f_{mod})\right) + \frac{\pi}{2} + \mathrm{p}\pi = \varphi_{demod1} + \frac{\pi}{2}$$

On voit que cette phase de démodulation ne dépend que de la profondeur de modulation et de la fonction de transfert de la cavité. Cette phase phase de démodulation correspond à la phase additionnelle $\phi_{dec2}$ mentionnée plus haut, et qui est telle que la fonction SP ne dépende plus de la RAM.

On vérifie maintenant qu'il est possible d'utiliser un des deux signaux d'erreur afin de verrouiller le laser et la cavité. On rappelle que les signaux d'erreurs utilisés sont (en oubliant le terme $G_{tot}I_o$):

$$V_{\varepsilon 1} \equiv \sum_{k=0}^{+\infty} [Re(db_k)\cos(\varphi_{demod}) + Im(db_k)\sin(\varphi_{demod})]$$

avec une phase de démodulation

$$cos(\varphi_{demod})\frac{d}{d\Delta\Phi}\left(\sum_{k=0}^{p} Re(b_k)\right) + sin(\varphi_{demod})\frac{d}{d\Delta\Phi}\left(\sum_{k=0}^{p} Im(b_k)\right) = 0$$

et

$$V_{\varepsilon 2} \equiv \sum_{k=0}^{+\infty} [Re(db_k)\cos(\varphi_{demod} + \pi/2) + Im(db_k)\sin(\varphi_{demod} + \pi/2)]$$

avec une phase de démodulation

$$-sin(\varphi_{demod})\frac{d}{d\Delta\Phi}\left(\sum_{k=0}^{p} Re(b_k)\right) + cos(\varphi_{demod})\frac{d}{d\Delta\Phi}\left(\sum_{k=0}^{p} Im(b_k)\right) = 0$$

avec l'expression de $b_k$ présentée en Equation 5, et (voir plus haut)

$$\begin{aligned} A_k = \; & |a|^2 J_k(\delta_0) J_{k+1}(\delta_0) + |b|^2 J_k(\delta_e) J_{k+1}(\delta_e) \\ & + |a||b| \; [J_k(\delta_e) J_{k+1}(\delta_0) \\ & + J_k(\delta_o) J_{k+1}(\delta_e)] \; cos(\Delta\Phi) \\ & - i \; |a||b| \; [J_k(\delta_o) J_{k+1}(\delta_e) - J_k(\delta_e) J_{k+1}(\delta_0)] \; sin(\Delta\Phi) \end{aligned}$$

et avec (voir Equation 4) :

$$db_k = \delta v \frac{db_k}{dv} + \delta\Delta\Phi \frac{db_k}{d\Delta\Phi}$$

$$= 2\;|a||b|\;[J_k(\delta_o)J_{k+1}(\delta_e) - J_k(\delta_e)J_{k+1}(\delta_0)]\;[q_k - i\;p_k]\;cos(\Delta\Phi)\;\delta\Delta\Phi - 2K_k \cdot Re(A_k) \cdot \;\delta v$$

soit

$$V_{\varepsilon 1} = 2|a||b|\;\delta\Delta\Phi \sum_{k=0}^{p} (q_k\;\cos(\varphi_{demod}) - \sin(\varphi_{demod})\,p_k)\big(J_k(\delta_o)J_{k+1}(\delta_e) - J_k(\delta_e)J_{k+1}(\delta_0)\big)$$

$$-\;2\;\delta v \left[cos\;(\varphi_{demod}) \sum_{k=0}^{p} Re(K_k) \cdot Re(A_k) + sin(\varphi_{demod}) \sum_{k=0}^{p} Im(K_k) \cdot Re(A_k)\right]$$

Comme la phase de démodulation est choisie pour annuler le premier terme, on a bien un signal d'erreur linéaire permettant d'asservir $\delta v$ à zéro et indépendant de $\Delta\Phi$. De même

$$V_{\varepsilon 2} = -2|a||b|\ \delta\Delta\Phi \sum_{k=0}^{p} (q_k \sin(\varphi_{demod}) + p_k \cos(\varphi_{demod}))\big(J_k(\delta_o)J_{k+1}(\delta_e) - J_k(\delta_e)J_{k+1}(\delta_0)\big)$$

$$- 2\,\delta\nu \left[-sin\,(\varphi_{demod}) \sum_{k=0}^{p} Re(K_k)\cdot Re(A_k) + cos(\varphi_{demod}) \sum_{k=0}^{p} Im(K_k)\cdot Re(A_k)\right]$$

On voit qu'il existe donc deux phases de découplage en quadrature de phase l'une de l'autre tel que à la phase de découplage et à l'écart nul, le niveau du plateau de la fonction PL s'annule quand la RAM est nulle. Ainsi, on vérifie que *($\delta\Delta\Phi$ =* 0,$\delta\nu$ = 0) est la seule solution atteinte quand les asservissements ont convergé. La fonction PL est en fait nulle pour toute valeur de $\Delta\Phi$ alors qu'elle est linéaire en fonction de $\delta\nu$ et qu'elle peut être utilisée pour verrouiller le laser et la cavité.

En réflexion, on a

$$\varphi_{demod1} = \arg\left(\sum_{k=0}^{p} [J_k(\delta_o)J_{k+1}(\delta_e) - J_k(\delta_e)J_{k+1}(\delta_0)]\ F(\nu_0 + kf_{mod})F(\nu_0 - (k+1)f_{mod})\right) + \mathrm{p}\,\pi$$

Comme les sidesbands sont nettement en dehors de la résonance de la cavité, elles sont quasiment totalement réfléchies et on a

soit

$$F(\nu_0 + kf_{mod}) \approx -F(\nu_0 - (k+1)f_{mod})$$

soit

$$\varphi_{demod1} \approx -\arg\left(\sum_{k=0}^{p} [J_k(\delta_o)J_{k+1}(\delta_e) - J_k(\delta_e)J_{k+1}(\delta_0)]\right) = 0$$

Comme

$$p_k + i\,q_k = F(\nu_0 + kf_{mod})F(\nu_0 - (k+1)f_{mod}) \approx -1 + 0i$$

alors

$$V_{\varepsilon 1} \approx 2|a||b|\ \delta\Delta\Phi \sin(0) \textstyle\sum_{k=0}^{p} J_k(\delta_o)J_{k+1}(\delta_e) - J_k(\delta_e)J_{k+1}(\delta_0) \approx 0$$

De même, $\varphi_{demod2} = \varphi_{demod} + \frac{\pi}{2}$,

$$V_{\varepsilon 2} \approx 2|a||b|\ \delta\Delta\Phi \cos(\varphi_{demod}) \sum_{k=0}^{p} \big(J_k(\delta_o)J_{k+1}(\delta_e) - J_k(\delta_e)J_{k+1}(\delta_0)\big)$$

$$\approx 2|a||b|\ \delta\Delta\Phi \cos\left(\frac{\pi}{2}\right) \sum_{k=0}^{p} J_k(\delta_o)J_{k+1}(\delta_e) - J_k(\delta_e)J_{k+1}(\delta_0) \approx 0$$

En réflexion, le découplage existe mais il conduit à une pente nulle ou en tout cas très faible pour les signaux d'erreur. Afin de compenser cette faible pente, de manière préférentielle, en réflexion, dans l'étape B iv) on démodule à 3x la fréquence de modulation $f_{mod}$.

On cherche ensuite à avoir un des deux signaux d'erreur $V\varepsilon_1$ ou $V\varepsilon_2$ qui évolue peu (idéalement pas du tout) lorsque la fréquence laser change autour de la résonance. Ainsi, si le laser se décale par rapport à la résonance, par exemple avec un mauvais fonctionnement de son asservissement, au premier ordre cela n'affecte pas la valeur de ce signal d'erreur dont nous allons montrer qu'il peut être pour asservir *sin(ΔΦ)*. Ainsi, ce signal d'erreur présente deux propriétés particulières : proche d'une résonance il est indépendant de la fréquence laser mais il dépend linéairement de la phase ΔΦ.

On cherche donc une phase de démodulation telle qu'un plateau, défini par une portion de valeur P de l'écart sur laquelle le signal d'erreur évolue peu (idéalement pas du tout c'est-à-dire tangente à la courbe horizontale) lorsque la fréquence laser change, existe autour d'une résonance pour un des deux signaux d'erreur $V\varepsilon_x$ ou $V\varepsilon_y$.

On cherche donc deux phases de démodulation $\varphi_{dem1}$ et $\varphi_{dem,2} = P_{dem1} + \pi/2$ telles que sur une portion P de valeur d'écart proche de 0

$$\frac{d}{d\nu}\left(\cos(\varphi_{dem})\sum_{k=0}^{p} Re(b_k) + \sin(\varphi_{dem})\sum_{k=0}^{p} Im(b_k)\right) = 0$$

ou

$$\frac{d}{d\nu}\left(-\sin(\varphi_{dem})\sum_{k=0}^{p} Re(b_k) + \cos(\varphi_{dem})\sum_{k=0}^{p} Im(b_k)\right) = 0$$

Soit

$$(A)\quad \cos(\varphi_{dem})\frac{d}{d\nu}\left(\sum_{k=0}^{p} Re(b_k)\right) + \sin(\varphi_{dem})\frac{d}{d\nu}\left(\sum_{k=0}^{p} Im(b_k)\right) = 0$$

ou

$$(B)\quad -\sin(\varphi_{dem})\frac{d}{d\nu}\left(\sum_{k=0}^{p} Re(b_k)\right) + \cos(\varphi_{dem})\frac{d}{d\nu}\left(\sum_{k=0}^{p} Im(b_k)\right) =$$

En utilisant l'expression de $b_k$ présentée en Equation 5 et comme présenté précédemment,

$$K_k = F(\nu_0 + kf_{mod})\left.\frac{dF}{d\nu}\right|_{\nu_0-(k+1)f_{mod}} - F(\nu_0 - (k+1)f_{mod})\left.\frac{dF}{d\nu}\right|_{\nu_0+kf_{mod}}$$

l'équation précédente (A) s'écrit :

$$\sin(\varphi_{dem})\, Re\left(\textstyle\sum_{k=0}^{p} Re(A_k)K_k\right) + \cos(\varphi_{dem})\, Im\left(\textstyle\sum_{k=0}^{p} Re(A_k)K_k\right) = 0$$

$$\tan(\varphi_{dem}) = -tan\left(\sum_{k=0}^{p} Re(A_k)K_k\right)$$

$$\varphi_{dem3} = \arg\left(\sum_{k=0}^{p} Re(A_k)K_k\right) + \frac{\pi}{2} + p\pi$$

De même l'équation B conduit à une phase de démodulation permettant d'obtenir le découplage donné par:

$$\tan(\varphi_{dem}) = tan\left(\sum_{k=0}^{p} Re(A_k)K_k\right)$$

Soit,

$$\varphi_{dem4} = \arg\left(\sum_{k=0}^{p} Re(A_k)K_k\right) + p\pi = \varphi_{dem3} - \frac{\pi}{2}$$

On voit qu'il existe donc deux phases de découplage en quadrature l'une de l'autre (voir figures 5A, 5B et 6A, 6B). La fonction PL représente l'évolution du signal d'erreur présentant un plateau en fonction de $\delta v$ qui est utilisé pour asservir la RAM.

On vérifie maintenant qu'il est possible d'utiliser le signal d'erreur donnant la fonction PL présentant un plateau afin d'asservir la phase $\Delta\Phi$ via la tension continue $V_{dc,PM}$ appliquée au modulateur de phase.

On rappelle que les signaux utilisés sont:

$$V_{\varepsilon_1} \equiv \sum_{k=0}^{+\infty} [Re(b_k)\cos(\varphi_{demod}) + Im(b_k)\sin(\varphi_{demod})]$$

Avec une phase de découplage

$$\cos(\varphi_{dem})\left(\sum_{k=0}^{p} Re(A_k)Re(K_k)\right) + \sin(\varphi_{dem})\left(\sum_{k=0}^{p} Re(A_k)Im(K_k)\right) = 0$$

Ou

$$V_{\varepsilon_2} \equiv \sum_{k=0}^{+\infty} [Re(b_k)\cos(\varphi_{dem} + \pi/2) + Im(b_k)\sin(\varphi_{dem} + \pi/2)]$$

Avec une phase de démodulation

$$-\sin(\varphi_{demod})\left(\sum_{k=0}^{p} Re(A_k)Re(K_k)\right) + \cos(\varphi_{demod})\left(\sum_{k=0}^{p} Re(A_k)Im(K_k)\right) = 0$$

Avec l'expression de $b_k$ présentée en Equation 5, et (voir plus haut)

$$\begin{aligned} A_k = {} & |a|^2 J_k(\delta_0)J_{k+1}(\delta_0) + |b|^2 J_k(\delta_e)J_{k+1}(\delta_e) \\ & + |a||b| \; [J_k(\delta_e)J_{k+1}(\delta_0) \\ & + J_k(\delta_o)J_{k+1}(\delta_e)] \; cos(\Delta\Phi) \\ & - i \; |a||b| \; [J_k(\delta_o)J_{k+1}(\delta_e) - J_k(\delta_e)J_{k+1}(\delta_0)] \; sin(\Delta\Phi) \end{aligned}$$

Et avec (voir Equation 4) :

$$db_k = \delta\nu \frac{db_k}{d\nu} + \delta\Delta\Phi \frac{db_k}{d\Delta\Phi}$$

$$= 2\,|a||b|\,[J_k(\delta_o)J_{k+1}(\delta_e) - J_k(\delta_e)J_{k+1}(\delta_0)]\,[q_k - i\,p_k]\,cos(\Delta\Phi)\,\delta\Delta\Phi - 2K_k \cdot Re(A_k) \cdot \delta\nu$$

On a :

$$V\varepsilon_1 = 2|a||b|\,\delta\Delta\Phi \sum_{k=0}^{p}(q_k\,\cos(\varphi_{dem}) - \sin(\varphi_{dem})\,p_k)\big(J_k(\delta_o)J_{k+1}(\delta_e) - J_k(\delta_e)J_{k+1}(\delta_0)\big) - 2\,\delta\nu\left[\cos(\varphi_{dem})\sum_{k=0}^{p} Re(K_k)\cdot Re(A_k) + \sin(\varphi_{dem})\sum_{k=0}^{p} Im(K_k)\cdot Re(A_k)\right]$$

Or, la phase de découplage permet justement d'annuler le deuxième terme. Comme souhaité, on obtient donc bien un signal d'erreur linéaire permettant d'asservir $\Delta\Phi$ à zéro et indépendant de $\delta\nu$.

Les figures 12A et 12B représentent respectivement évolution de $V_{\varepsilon 1} = \sum_{k=0}^{p} Re(b_k)\cos(\varphi_{dem}) + Im(b_k)\sin(\varphi_{dem})$ et de $V_{\varepsilon_2} = \sum_{k=0}^{p} -Re(b_k)\sin(\varphi_{dem}) + Im(b_k)cos(\varphi_{dem})$ en fonction de $\Delta\phi$. Ces évolutions ont été obtenues avec les mêmes paramètres de cavité que ceux utilisés pour les figures 5A à 6B. Ici, la fréquence de modulation est de $f_{mod}$ = *0.4MHz* et $\delta\nu$ = *80kHz* et un fonctionnement en transmission, c'est-à-dire le cas dans lequel l'annulation de la RAM et l'asservissement se fait avec la photodiode PDt. On voit que malgré un écart à la résonance de 80 kHz, le signal d'erreur $V_{\varepsilon y}$ s'annule pour $\Delta\Phi = 0$ et reste linéaire autour ce qui permet d'assurer un asservissement annulant la RAM. On note que si l'autre phase de découplage avait été utilisée, ce serait le signal d'erreur $V_{\varepsilon 1}$ qui s'annulerait pour $\Delta\Phi = 0$ et qui permettrait de réaliser l'asservissement.

En réflexion, l'intêret est limité car les sidebands étant quasiment réflechies on a

$$\left.\frac{dF}{d\nu}\right|_{\nu_0-(k+1)f_{mod}} \approx \left.\frac{dF}{d\nu}\right|_{\nu_0+kf_{mod}} \approx 0 \quad \text{et} \quad F(\nu_0 + kf_{mod}) \approx -F(\nu_0 - (k+1)f$$

soit

$$K_k = F(\nu_0 + kf_{mod})\left.\frac{dF}{d\nu}\right|_{\nu_0-(k+1)f_{mod}} - F(\nu_0 - (k+1)f_{mod})\left.\frac{dF}{d\nu}\right|_{\nu_0+kf_{mod}} \approx 0$$

donc

$$\varphi_{dem3} = \arg\big(\textstyle\sum_{k=0}^{p} Re(A_k)K_k\big) + \frac{\pi}{2} + p\pi \approx \frac{\pi}{2} \text{ et } \varphi_{dem4} \approx 0$$

Comme les sidesbands sont nettement en dehors de la résonance de la cavité, elles sont quasiment totalement réfléchies et on a $p_k + i\,q_k = F(\nu_0 + kf_{mod})\overline{F(\nu_0 - (k+1)f_{mod})} \approx -1 + 0i$ alors

$$V\varepsilon_1 = 2|a||b|\,\delta\Delta\Phi\cos\left(\frac{\pi}{2}\right)\sum_{k=0}^{p} q_k\,\big(J_k(\delta_o)J_{k+1}(\delta_e) - J_k(\delta_e)J_{k+1}(\delta_0)\big) = 0$$

De même $V\varepsilon_2 = 0$.

En réflexion, le découplage existe mais il conduit à une pente nulle ou en tout cas très faible pour les signaux d'erreur. Afin de compenser cette faible pente, de manière préférentielle, en réflexion, dans l'étape B iv) on démodule à 3x la fréquence de modulation $f_{mod}$.

Ainsi, en utilisant une des deux phases de démodulation $\varphi_{dem1}$ *ou* $\varphi_{dem2}$, et une autre phase de démodulation $\varphi_{dem3}$ ou $\varphi_{dem4}$, il est possible d'asservir indépendamment $sin(\Delta\Phi) = 0$ et $\delta v = 0$. On est alors sûr que le système converge

- vers $sin(\Delta\Phi) = 0$ (la RAM est nulle) en asservissant l'offset DC du modulateur de phase en utilisant un signal d'erreur qui varie linéairement autour du point $\Delta\Phi = p\pi$ et ne contient aucune composante venant d'une dérive (faible) du laser par rapport à la cavité
- et $\delta v = 0$ en utilisant un signal d'erreur pour asservir la fréquence du laser qui ne contiendra aucune composante provenant de la RAM et qui varie de manière linéaire autour du point ($\delta v = 0$).

Par ailleurs, si on démodule en phase et en quadrature alors les signaux d'erreurs sont proportionnels à $V_{\varepsilon_x} = \sum_{k=0}^{p} Re(A_k)\, Re(K_k)$ et $V_{\varepsilon_y} = \sum_{k=0}^{p} Re(A_k)\, Im(K_k)$. On peut montrer qu'il existe une fréquence de modulation $f_{mod}$ telle que :

$$\sum_{k=0}^{p} Re(A_k)\, Re(K_k) = 0 \text{ ou } \sum_{k=0}^{p} Re(A_k)\, Im(K_k) = 0.$$

Les figures 13A et 13B présentent une évolution de $V_{\varepsilon_x} = \sum_{k=0}^{p} Re(A_k)\, Re(K_k)$ et $V_{\varepsilon_y} = \sum_{k=0}^{p} Re(A_k)\, Im(K_k)$ en fonction de $f_{mod}/ISL$. Ces évolutions ont été obtenues avec les mêmes paramètres de cavité que ceux utilisés pour les figures 5A à 6B, en transmission. Dans la figure 14A, on remarque que la condition $V_{\varepsilon_x} = \sum_{k=0}^{p} Re(A_k)\, Re(K_k) = 0$ peut être atteinte pour $f_{mod}$= 0.0313102 ISL. On voit aussi sur la figure 14B que $V_{\varepsilon_y} = \sum_{k=0}^{p} Re(A_k)\, Im(K_k) = 0$, qui est la pente du signal d'erreur pour asservir la fréquence optique du laser sur la cavité -ou l'inverse- (voir Equation 4), passe par un maximum à cette valeur de $f_{mod}$. Ainsi, pour la fréquence de modulation annulant un des signaux d'erreur, l'autre signal d'erreur présente une pente maximale.

## Revendications

**1.** Méthode d'asservissement d'un dispositif optique comprenant une cavité (C) présentant une résonance autour d'une fréquence centrale $f_c$, un laser (L) et un modulateur de phase (PM), ladite méthode étant adaptée pour asservir ladite cavité (C) sur ledit laser (L) ou réciproquement et pour compenser une modulation d'amplitude introduite par ledit modulateur de phase (PM), ladite méthode comprenant les étapes suivante :

A. Générer, par ledit laser (L), un rayonnement laser (LL) à une fréquence optique f comprise dans ladite résonance

B. Faire varier un écart $\delta v$ entre ladite fréquence optique dudit rayonnement laser et ladite fréquence centrale de manière à ce que ladite fréquence optique balaye ladite résonance, ledit écart étant contrôlé par un paramètre d'un élément dudit dispositif, et pour chaque écart $\delta v_i$

i. Moduler, à une fréquence de modulation $f_{mod}$, une phase dudit rayonnement laser, par une phase de modulation $\phi_{mod}$, avec le modulateur de phase (PM),

ii. Injecter le rayonnement modulé en phase dans ladite cavité (C),

iii. Détecter, par une photodiode ($PD_t$, $PD_r$), un rayonnement réfléchi ou transmis par ladite cavité et générer un signal électrique (St, Sr) représentatif de l'intensité dudit rayonnement détecté,

iv. Démoduler ledit signal électrique à ladite fréquence de modulation $f_{mod}$ en générant de manière synchrone un premier signal démodulé et un deuxième signal démodulé représentatif du signal électrique démodulé, respectivement à une première phase de démodulation $\phi_{dem,1}$ et à une deuxième phase de modulation $\phi_{dem,2}$ $\phi_{dem,2} \approx \phi_{dem,1} \pm k$, avec $k \in [0; 2\pi]$ différente de ladite première phase et en filtrant le premier et le deuxième signal de manière à conserver uniquement une composante continue du premier signal démodulé $V\varepsilon_1$ dit signal d'erreur 1 et du deuxième signal démodulé $V\varepsilon_2$, dit signal d'erreur 2

C. Calculer une fonction 1 $f_2$ et une fonction 2 $f_2$ représentant respectivement une évolution du signal d'erreur 1 et une évolution du signal d'erreur 2 en fonction dudit écart pour une valeur donnée de ladite première phase de démodulation,

D. Répéter les étapes B) et C) en faisant varier ladite première phase de démodulation entre chaque répétition jusqu'à ce que, pour une valeur de la première phase de démodulation dite phase de découplage $\phi_{dem,1} = \phi_{dec}$, ladite fonction 1 ou ladite fonction 2 présente un plateau sur une portion de valeurs dudit écart comprenant 0, ladite fonction parmi 1 ou 2 présentant le plateau étant appelée fonction PL, la fonction ne présentant pas le plateau étant appelée fonction SP ;

E. A ladite phase de découplage, faire varier ledit écart de manière à observer un extremum, pour un écart dit nul, ladite intensité du rayonnement lumineux détectée par ladite photodiode et asservir ledit élément sur une valeur dudit paramètre permettant de maintenir cet extremum d'intensité,

F. A ladite phase de découplage, moduler la phase dudit rayonnement laser, avec le modulateur de phase (PM), par un signal périodique dit additionnel à une fréquence de modulation dite additionnelle $f_{add}$ en plus de celle à ladite fréquence de modulation $f_{mod}$ ;

G. Minimiser, pour la fonction SP, une amplitude d'une première harmonique du signal additionnel, en faisant varier ladite première phase de démodulation, ce minimum étant atteint pour une première phase de démodulation dite additionnelle $\phi_{dem,1} = \phi_{dec2}$, et, à ladite phase additionnelle, asservir ledit élément sur une valeur dudit paramètre permettant de maintenir cet extremum d'intensité

H. A ladite phase de découplage $\phi_{dem,1} = \phi_{dec}$ et audit écart nul, faire varier ladite première phase de modulation jusqu'à annuler la fonction PL, et maintenir l'annulation de ladite fonction PL par un asservissement dudit modulateur de phase.

**2.** Méthode selon la revendication 1 dans laquelle, l'étape H) consiste à faire varier une tension $V_{dc,pm}$ dudit modulateur de phase jusqu'à une valeur de tension dite de RAM permettant d'annuler la fonction PL et asservir ledit modulateur de phase sur ladite tension de RAM.

**3.** Méthode selon la revendication 1 ou 2, dans laquelle dans l'étape iii) ladite photodiode détecte le rayonnement transmis par ladite cavité, ladite méthode comprenant une étape D1) après l'étape D) et avant l'étape E) consistant à faire varier ladite fréquence de modulation jusqu'à ce qu'une pente de ladite fonction SP soit maximale sur ladite portion de valeurs, en répétant l'étape D pour chaque fréquence de modulation.

**4.** Méthode selon l'une quelconque des revendications précédentes, dans lequel la fréquence additionnelle $f_{add}$ est 10 fois inférieure à la fréquence de modulation $f_{mod}$.

**5.** Dispositif optique (D) comprenant une cavité (C) présentant une résonance autour d'une fréquence centrale $f_c$ et un laser (L) adapté pour un générer rayonnement laser (LL) à une fréquence optique $f$ comprise dans ladite résonance, ledit dispositif comprenant :

- un élément adapté pour faire varier un écart $\delta v$ entre ladite fréquence optique dudit rayonnement laser et ladite fréquence centrale de manière à ce que ladite fréquence optique balaye ladite résonance, ledit écart étant contrôlé par un paramètre dudit élément,
- un modulateur de phase (PM) configuré pour moduler à une fréquence de modulation $f_{mod}$, une phase dudit rayonnement laser, par une phase de modulation $\phi_{mod}$ et adapté pour faire varier ladite phase de modulation, le rayonnement modulé en phase étant injecté dans ladite cavité (C),
- une photodiode (PDt, PDr) agencée pour détecter un rayonnement transmis ou réfléchis par ladite cavité (C) et configurée pour générer un signal électrique représentatif de l'intensité dudit rayonnement détecté,
- un système de démodulation (Dem) adapté pour démoduler ledit signal électrique à ladite fréquence de modulation $f_{mod}$, pour chaque écart $\delta v_i$, en :

  ◦ générant de manière synchrone, un premier signal démodulé et un deuxième signal démodulé représentatif du signal électrique démodulé, respectivement à une première phase de démodulation $\phi_{dem,1}$ et à une deuxième phase de modulation $\phi_{dem,2}$ différente de ladite première phase de démodulation, tel que $\phi_{dem,2} \approx \phi_{dem,1} \pm k$, avec $k \in [0; 2\pi]$,
  ◦ filtrant le premier et le deuxième signal de manière à conserver uniquement une composante continue du premier signal démodulé dit signal d'erreur 1 $V\varepsilon_1$ et du deuxième signal démodulé dit signal d'erreur 2 $V\varepsilon_2$

- un processeur (UT) relié au système de modulation et adapté pour :

◦ calculer une fonction 1 et une fonction 2 représentant respectivement une évolution du signal d'erreur 1 et une évolution du signal d'erreur 2 en fonction dudit écart $\delta v$ pour une valeur donnée de ladite première phase de démodulation,
◦ déterminer une valeur de la première phase de démodulation dite phase de découplage $\phi_{dem,1} = \phi_{dec}$ pour laquelle ladite fonction 1 ou ladite fonction 2 présente un plateau sur une portion de valeurs dudit écart comprenant 0, ladite fonction parmi X ou Y présentant le plateau étant appelée fonction PL, la fonction ne présentant pas le plateau étant appelée fonction SP,
◦ déterminer, à ladite phase de découplage, un écart dit écart nul pour lequel ladite intensité du rayonnement lumineux détectée par ladite photodiode atteint un extremum, et asservir ledit élément (E) sur une valeur dudit paramètre permettant de maintenir cet extremum d'intensité
◦ moduler, a ladite phase de découplage, la phase dudit rayonnement laser, avec le modulateur de phase (PM), par un signal périodique dit additionnel à une fréquence de modulation dite additionnelle $f_{add}$ en plus de celle à ladite fréquence de modulation $f_{mod}$ ;
◦ minimiser, pour la fonction SP, une amplitude d'une première harmonique du signal additionnel en faisant varier ladite deuxième phase de démodulation, ce minimum étant atteint pour une deuxième phase de démodulation dite additionnelle, et asservir ledit élément sur une valeur dudit paramètre permettant de maintenir cet extremum d'intensité à ladite phase additionnelle
◦ déterminer, à ladite phase de découplage et audit écart nul, une valeur de ladite phase de modulation pour laquelle ladite fonction PL s'annule, et asservir ledit modulateur de phase (PM) afin de maintenir l'annulation de ladite fonction PL.

**6.** Dispositif selon la revendication précédente, dans lequel ledit élément est ledit laser (L) et ledit paramètre est une tension continue $V_{dc,L}$ d'alimentation du laser.

**7.** Dispositif selon la revendication 5, dans lequel l'élément est un modulateur acousto-optique (AOM) configuré pour faire varier ladite fréquence optique du rayonnement laser avant qu'il soit modulé en phase par ledit modulateur de phase, ledit paramètre étant une fréquence d'excitation $f_{AOM}$ dudit modulateur acousto-optique

**8.** Dispositif selon la revendication 5, dans lequel l'élément est un étage de translation piézoélectrique sur lequel est fixé un composant de ladite cavité, ledit étage étant adapté pour faire varier une longueur de la cavité, ledit paramètre étant ladite longueur de la cavité.

**9.** Dispositif selon l'une des revendications 5 à 8, dans lequel la cavité (C) est une cavité en anneau comprenant une fibre optique (FO) et un premier et un deuxième moyen de couplage (M1, M2) configurés pour coupler ledit rayonnement injecté dans ladite cavité avec ladite fibre optique, le premier et le deuxième moyen de couplage comprenant un miroir ou un coupleur fibré.

**10.** Dispositif selon la revendication 9, comprenant :

- un séparateur optique (LS) adapté pour séparer le rayonnement laser en une première et une deuxième voie optique (F, F') de manière à injecter ledit rayonnement laser au sein de la cavité selon un premier et un deuxième sens,
- la première voie optique comprend le modulateur de phase (PM) et un circulateur optique (CO) placé après le modulateur de phase,
- la deuxième voie optique comprend un modulateur de phase additionnel (PM'), et un circulateur optique additionnel (CO') placé après le modulateur de phase additionnel,
- ledit circulateur optique (CO) et ledit circulateur optique additionnel étant adaptés pour diriger le rayonnement laser injecté respectivement selon ledit deuxième sens et selon ledit premier sens puis réfléchis par la cavité (C) vers une photodiode de réflexion additionnelle (PDr') et vers ladite photodiode (PDr),
- un premier trajet optique de ladite première voie optique et une second trajet optique ladite deuxième voie optique entre respectivement le modulateur de phase et ladite cavité, et le modulateur de phase additionnel et ladite cavité étant en optique guidée.

## Patentansprüche

**1.** Verfahren zur Servosteuerung einer optischen Vorrichtung, die einen Hohlraum (C) mit einer Resonanz um eine Mittenfrequenz $f_c$, einen Laser (L) und einen Phasenmodulator (PM) umfasst, wobei das Verfahren angepasst ist, um den Hohlraum (C) auf den Laser (L) oder umgekehrt servozusteuern und um eine durch den Phasenmodulator (PM) eingeführte Amplitudenmodulation zu kompensieren, wobei das Verfahren die folgenden Schritte umfasst:

A. Erzeugen von Laserstrahlung (LL) mit einer optischen Frequenz f innerhalb der Resonanz durch den Laser (L).
B. Variieren einer Abweichung $\delta v$ zwischen der optischen Frequenz der Laserstrahlung und der Mittenfrequenz, sodass die optische Frequenz die Resonanz abtastet, wobei die Abweichung durch einen Parameter eines Elements der Vorrichtung gesteuert wird, und für jede Abweichung $\delta v_i$

i. Modulieren, bei einer Modulationsfrequenz $f_{mod}$ einer Phase der Laserstrahlung, durch eine Modulationsphase $\phi_{mod}$, mit dem Phasenmodulator (PM),
ii. Injizieren der phasenmodulierten Strahlung in den Hohlraum (C),
iii. Erkennen, durch eine Fotodiode ($PD_t$, $PD_r$), einer von dem Hohlraum reflektierten oder übertragenen Strahlung und Erzeugen eines elektrischen Signals (St, Sr), das für die Intensität der erkannten Strahlung repräsentativ ist,
iv. Demodulieren des elektrischen Signals bei der Modulationsfrequenz $f_{mod}$ durch synchrones Erzeugen eines ersten demodulierten Signals und eines zweiten demodulierten Signals, welches für das demodulierte elektrische Signal repräsentativ ist, jeweils in einer ersten Demodulationsphase $\phi_{dem,1}$ und in einer zweiten Modulationsphase $\phi_{dem,2}$, wobei $\phi_{dem,2} \approx \phi_{dem,1} \pm k$, worin $k \in [0; 2\pi]$, die von der ersten Phase verschieden ist, und durch Filtern des ersten und des zweiten Signals, sodass nur eine Gleichstromkomponente des ersten demodulierten Signals $V\varepsilon_1$, genannt Fehlersignal 1, und des zweiten demodulierten Signals $V\varepsilon_2$, genannt Fehlersignal 2, erhalten bleibt.

C. Berechnen einer Funktion 1 $f_2$ und einer Funktion 2 $f_2$, die jeweils eine Entwicklung des Fehlersignals 1 und eine Entwicklung des Fehlersignals 2 in Abhängigkeit von der Abweichung für einen gegebenen Wert der ersten Demodulationsphase darstellen,
D. Wiederholen der Schritte B) und C), indem die erste Demodulationsphase zwischen jeder Wiederholung variiert wird, bis für einen Wert der ersten Demodulationsphase, genannt Entkopplungsphase $\phi_{dem,1} = \phi_{dec}$, die Funktion 1 oder die Funktion 2 ein Plateau über einen Abschnitt von Werten der Abweichung umfassend 0 aufweist, wobei die Funktion unter 1 oder 2, die das Plateau aufweist, PL-Funktion genannt wird, die Funktion, die das Plateau nicht aufweist, SP-Funktion genannt wird;
E. in der Entkopplungsphase, Variieren der Abweichung, um ein Extremum der Intensität der von der Fotodiode erkannten Lichtstrahlung bei einer sogenannten Nullabweichung zu beobachten, und Servosteuern des Elements auf einen Wert des Parameters, der es ermöglicht, dieses Intensitätsextremum aufrechtzuerhalten,
F. in der Entkopplungsphase, Modulieren der Phase der Laserstrahlung mit dem Phasenmodulator (PM), durch ein zusätzlich genanntes periodisches Signal, bei einer zusätzlich genannten Modulationsfrequenz $f_{add}$, zusätzlich zu der bei der Modulationsfrequenz $f_{mod}$;
G. Minimieren einer Amplitude einer ersten Harmonischen des zusätzlichen Signals für die SP-Funktion, indem die erste Demodulationsphase variiert wird, wobei dieses Minimum für eine zusätzlich genannte erste Demodulationsphase $\phi_{dem,1} = \phi_{dec2}$ erreicht wird, und in der zusätzlichen Phase, Servosteuern des Elements auf einen Wert des Parameters, der es ermöglicht, dieses Intensitätsextremum aufrechtzuerhalten,
H. in der Entkopplungsphase $\phi_{dem,1} = \phi_{dec}$ und bei der Nullabweichung, Variieren der ersten Modulationsphase, bis die PL-Funktion aufgehoben ist, und Aufrechterhalten der Aufhebung der PL-Funktion durch eine Servosteuerung des Phasenmodulators.

**2.** Verfahren nach Anspruch 1, wobei Schritt H) darin besteht, eine Spannung $V_{dc,pm}$ des Phasenmodulators bis zu einem sogenannten RAM-Spannungswert, der es ermöglicht, die PL-Funktion aufzuheben, zu variieren, und den Phasenmodulator auf die RAM-Spannung servozusteuern.

**3.** Verfahren nach Anspruch 1 oder 2, wobei in Schritt iii) die Fotodiode die von dem Hohlraum übertragene Strahlung erkennt, wobei das Verfahren einen Schritt D1) nach Schritt D) und vor Schritt E) umfasst, der darin besteht, die Modulationsfrequenz zu variieren, bis eine Flanke der SP-Funktion über dem Abschnitt von Werten maximal ist, indem Schritt D für jede Modulationsfrequenz wiederholt wird.

**4.** Verfahren nach einem der vorhergehenden Ansprüche, wobei die zusätzliche Frequenz $f_{add}$ 10 Mal kleiner ist als die Modulationsfrequenz $f_{mod}$.

**5.** Optische Vorrichtung (D), die einen Hohlraum (C) mit einer Resonanz um eine Mittenfrequenz $f_c$ und einen Laser (L) umfasst, der angepasst ist, um Laserstrahlung (LL) mit einer optischen Frequenz f zu erzeugen, die in der Resonanz enthalten ist, wobei die Vorrichtung Folgendes umfasst:

- ein Element, das angepasst ist, um eine Abweichung $\delta v$ zwischen der optischen Frequenz der Laserstrahlung und der Mittenfrequenz zu variieren, sodass die optische Frequenz die Resonanz abtastet, wobei die Abweichung durch einen Parameter des Elements gesteuert wird,
- einen Phasenmodulator (PM), der konfiguriert ist, um bei einer Modulationsfrequenz $f_{mod}$ eine Phase der Laserstrahlung durch einer Modulationsphase $\phi_{mod}$ zu modulieren, und angepasst ist, um die Modulationsphase zu variieren, wobei die phasenmodulierte Strahlung in den Hohlraum (C) injiziert wird,
- eine Fotodiode (PDt, PDr), die so angeordnet ist, dass sie von dem Hohlraum (C) übertragene oder reflektierte Strahlung erkennt, und so konfiguriert ist, dass sie ein elektrisches Signal erzeugt, das für die Intensität der erkannten Strahlung repräsentativ ist,
- ein Demodulationssystem (Dem), das angepasst ist, um das elektrische Signal mit der Modulationsfrequenz $f_{mod}$ für jede Abweichung $\delta v_i$ zu demodulieren, durch:

  ◦ Erzeugen eines ersten demodulierten Signals und eines zweiten demodulierten Signals, das für das demodulierte elektrische Signal repräsentativ ist, synchron jeweils in einer ersten Demodulationsphase $\phi_{dem,1}$, und in einer zweiten Modulationsphase $\phi_{dem,2}$, die sich von der ersten Demodulationsphase unterscheidet, sodass $\phi_{dem,2} \approx \phi_{dem,1} \pm k$, wobei $k \in [0; 2\pi]$,
  ◦ Filtern des ersten und des zweiten Signals, sodass nur eine Gleichstromkomponente des ersten demodulierten Signals, genannt Fehlersignal 1 $V\varepsilon_1$, und des zweiten demodulierten Signals, genannt Fehlersignal 2 $V\varepsilon_2$, erhalten bleibt,

- einen Prozessor (UT), der mit dem Modulationssystem verbunden und zu Folgendem angepasst ist:

  ◦ Berechnen einer Funktion 1 und einer Funktion 2, die jeweils eine Entwicklung des Fehlersignals 1 und eine Entwicklung des Fehlersignals 2 in Abhängigkeit von der Abweichung $\delta v$ für einen gegebenen Wert der ersten Demodulationsphase darstellen,
  ◦ Bestimmen eines Wertes der ersten Demodulationsphase, genannt Entkopplungsphase $\phi_{dem,1} = \phi_{dec}$, bei dem die Funktion 1 oder die Funktion 2 ein Plateau über einem Abschnitt von Werten der Abweichung umfassend 0 aufweist, wobei die Funktion aus X oder Y, die das Plateau aufweist, PL-Funktion genannt wird, und die Funktion, die das Plateau nicht aufweist, SP-Funktion genannt wird;
  ◦ Bestimmen, in der Entkopplungsphase, einer Nullabweichung genannten Abweichung, bei der die Intensität der von der Fotodiode erkannten Lichtstrahlung ein Extremum erreicht, und Servosteuern des Elements (E) auf einen Wert des Parameters, der es ermöglicht, dieses Intensitätsextremum aufrechtzuerhalten,
  ◦ Modulieren, in der Entkopplungsphase, der Phase der Laserstrahlung mit dem Phasenmodulator (PM) durch ein zusätzlich genanntes periodisches Signal mit einer zusätzlich genannten Modulationsfrequenz $f_{add}$, zusätzlich zu der bei der Modulationsfrequenz $f_{mod}$;
  ◦ Minimieren einer Amplitude einer ersten Harmonischen des zusätzlichen Signals für die SP-Funktion durch Variieren der zweiten Demodulationsphase, wobei dieses Minimum für eine zusätzlich genannte zweite Demodulationsphase erreicht wird, und Servosteuern des Elements auf einen Wert des Parameters, der es ermöglicht, dieses Intensitätsextremum in der zusätzlichen Phase aufrechtzuerhalten,
  ◦ Bestimmen, in der Entkopplungsphase und bei der Nullabweichung, eines Wertes der Modulationsphase, bei dem sich die PL-Funktion aufhebt, und Servosteuern des Phasenmodulators (PM), um die Aufhebung der PL-Funktion aufrechtzuerhalten.

**6.** Vorrichtung nach dem vorhergehenden Anspruch, wobei das Element der Laser (L) ist und der Parameter eine Gleichspannung $V_{dc,L}$ zur Versorgung des Lasers ist.

**7.** Vorrichtung nach Anspruch 5, wobei das Element ein akustooptischer Modulator (AOM) ist, der so konfiguriert ist, dass er die optische Frequenz der Laserstrahlung variiert, bevor sie durch den Phasenmodulator phasenmoduliert wird, wobei der Parameter eine Anregungsfrequenz $f_{AOM}$ des akustooptischen Modulators ist.

**8.** Vorrichtung nach Anspruch 5, wobei das Element eine piezoelektrische Translationsstufe ist, an der eine Komponente des Hohlraums befestigt ist, wobei die Stufe angepasst ist, um eine Länge des Hohlraums zu variieren, wobei der Parameter die Länge des Hohlraums ist.

**9.** Vorrichtung nach einem der Ansprüche 5 bis 8, wobei der Hohlraum (C) ein ringförmiger Hohlraum ist, der eine optische Faser (FO) und ein erstes und ein zweites Kopplungsmittel (M1, M2) umfasst, die so konfiguriert sind, dass sie die in den Hohlraum injizierte Strahlung mit der optischen Faser koppeln, wobei das erste und das zweite Kopplungsmittel einen Spiegel oder einen Faserkoppler umfassen.

**10.** Vorrichtung nach Anspruch 9, Folgendes umfassend:

- einen optischen Separator (LS), der angepasst ist, um die Laserstrahlung in einen ersten und einen zweiten optischen Kanal (F, F') aufzuteilen, um die Laserstrahlung innerhalb des Hohlraums entlang einer ersten und einer zweiten Richtung zu injizieren,
- der erste optische Kanal umfasst den Phasenmodulator (PM) und einen optischen Zirkulator (CO), der nach dem Phasenmodulator platziert ist,
- der zweite optische Kanal umfasst einen zusätzlichen Phasenmodulator (PM'), und einen zusätzlichen optischen Zirkulator (CO'), der nach dem zusätzlichen Phasenmodulator platziert ist,
- wobei der optische Zirkulator (CO) und der zusätzliche optische Zirkulator angepasst sind, um die Laserstrahlung, die jeweils entlang der zweiten Richtung und entlang der ersten Richtung injiziert und dann von dem Hohlraum (C) reflektiert wird, in Richtung einer zusätzlichen Reflexionsfotodiode (PDr') und in Richtung der Fotodiode (PDr) zu leiten,
- wobei ein erster Strahlengang des ersten optischen Kanals und eine zweiter Strahlengang zweiten optischen Kanals, jeweils zwischen dem Phasenmodulator und dem Hohlraum, und dem zusätzliche Phasenmodulator und dem Hohlraum, eine geführte Optikkonfiguration aufweisen.

## Claims

**1.** A method for the servo control of an optical device comprising a cavity (C) exhibiting a resonance around a central frequency $f_c$, a laser (L) and a phase modulator (PM), said method being adapted to servo-control said cavity (C) to said laser (L) or vice versa and to compensate for an amplitude modulation introduced by said phase modulator (PM), said method comprising the following steps:

A. generating, through said laser (L), laser radiation (LL) at an optical frequency f within said resonance,
B. varying a difference $\delta v$ between said optical frequency of said laser radiation and said central frequency, such that said optical frequency scans said resonance, said difference being controlled by a parameter of an element of said device, and for each difference $\delta v_i$

i. modulating, at a modulation frequency $f_{mod}$, a phase of said laser radiation, through a modulation phase $\phi_{mod}$, with the phase modulator (PM),
ii. injecting the phase-modulated radiation into said cavity (C),
iii. detecting, through a photodiode ($PD_t$, $PD_r$), radiation reflected or transmitted by said cavity and generating an electrical signal (St, Sr) representative of the intensity of said detected radiation,
iv. demodulating said electrical signal at said modulation frequency $f_{mod}$ by synchronously generating a first demodulated signal and a second demodulated signal representative of the demodulated electrical signal, respectively at a first demodulation phase $\phi_{dem,1}$ and at a second modulation phase $\phi_{dem,2}$, with $\phi_{dem,2} \approx \phi_{dem,1} \pm k$, where $k \in [0; 2\pi]$ is different from said first phase, and by filtering the first and the second signal so as to retain only a DC component of the first demodulated signal $V\varepsilon_1$, called error signal 1, and of the second demodulated signal $V\varepsilon_2$, called error signal 2,

C. computing a function 1 $f_2$ and a function 2 $f_2$ respectively representing an evolution in the error signal 1 and an evolution in the error signal 2 as a function of said difference for a given value of said first demodulation phase,
D. repeating steps B) and C) by varying said first demodulation phase between each repetition until, for a value of the first demodulation phase, called decoupling phase $\phi_{dem,1} = \phi_{dec}$, said function 1 or said function 2 has a plateau on a portion of values of said difference comprising 0, said function out of 1 or 2 having the plateau being called PL function, the function not having the plateau being called SP function;
E. at said decoupling phase, varying said difference so as to observe a peak, for what is called a zero difference, said intensity of the light radiation detected by said photodiode, and servo-controlling said element to a value of said parameter that makes it possible to maintain this intensity peak,
F. at said decoupling phase, modulating the phase of said laser radiation with the phase modulator (PM), through a so-called additional periodic signal at a so-called additional modulation frequency $f_{add}$ in addition to that at said modulation frequency $f_{mod}$ ;
G. minimising, for the SP function, an amplitude of a first harmonic of the additional signal, by varying said first demodulation phase, this minimum being reached for a so-called additional first demodulation phase $\phi_{dem,1} = \phi_{dec2}$, and, at said additional phase, servo-controlling said element to a value of said parameter that makes it possible to maintain this intensity peak,
H. at said decoupling phase $\phi_{dem,1} = \phi_{dec}$ and at said zero difference, varying said first modulation phase until the PL function is cancelled out, and maintaining the cancelling out of said PL function by servo-controlling said phase modulator.

**2.** The method according to claim 1, wherein step H) consists in varying a voltage $V_{dc,pm}$ of said phase modulator up to a so-called RAM voltage value that makes it possible to cancel out the PL function and servo-controlling said phase modulator to said RAM voltage.

**3.** The method according to claim 1 or 2, wherein, in step iii), said photodiode detects the radiation transmitted by said cavity, said method comprising a step D1), after step D) and before step E), consisting in varying said modulation frequency until a slope of said SP function is at a maximum on said portion of values, by repeating step D for each modulation frequency.

**4.** The method according to any one of the preceding claims, wherein the additional frequency $f_{add}$ is 10 times lower than the modulation frequency $f_{mod}$.

**5.** An optical device (D) comprising a cavity (C) exhibiting a resonance around a central frequency $f_c$ and a laser (L) adapted to generate laser radiation (LL) at an optical frequency f within said resonance, said device comprising:

- an element adapted to vary a difference $\delta v$ between said optical frequency of said laser radiation and said central frequency, such that said optical frequency scans said resonance, said difference being controlled by a parameter of said element,
- a phase modulator (PM) configured to modulate, at a modulation frequency $f_{mod}$, a phase of said laser radiation, through a modulation phase $\phi_{mod}$, and adapted to vary said modulation phase, the phase-modulated radiation being injected into said cavity (C),
- a photodiode (PDt, PDr) arranged to detect radiation transmitted or reflected by said cavity (C) and configured to generate an electrical signal representative of the intensity of said detected radiation,
- a demodulation system (Dem) adapted to demodulate said electrical signal at said modulation frequency $f_{mod}$, for each difference $\delta v_i$, by:

  ◦ synchronously generating a first demodulated signal and a second demodulated signal representative of the demodulated electrical signal, respectively at a first demodulation phase $\phi_{dem,1}$ and at a second modulation phase $\phi_{dem,2}$ different from said first demodulation phase, such that $\phi_{dem,2} \approx \phi_{dem,1} \pm k$, with $k \in [0; 2\pi]$,
  ◦ filtering the first and the second signal so as to retain only a DC component of the first demodulated signal, called error signal 1 $V\varepsilon_1$, and of the second demodulated signal, called error signal 2 $V\varepsilon_2$,

- a processor (UT) connected to the modulation system and adapted to:

  ◦ compute a function 1 and a function 2 respectively representing an evolution in the error signal 1 and an evolution in the error signal 2 as a function of said difference $\delta v$ for a given value of said first demodulation phase,
  ◦ determine a value of the first demodulation phase, called decoupling phase $\phi_{dem,1} = \phi_{dec}$, for which said function 1 or said function 2 has a plateau on a portion of values of said difference comprising 0, said function out of X or Y having the plateau being called PL function, the function not having the plateau being called SP function,
  ◦ determine, at said decoupling phase, a difference, called zero difference, for which said intensity of the light radiation detected by said photodiode reaches a peak, and servo-control said element (E) to a value of said parameter that makes it possible to maintain this intensity peak,
  ◦ modulate, at said decoupling phase, the phase of said laser radiation, with the phase modulator (PM), through a so-called additional periodic signal at a so-called additional modulation frequency $f_{add}$ in addition to that at said modulation frequency $f_{mod}$;
  ◦ minimise, for the SP function, an amplitude of a first harmonic of the additional signal, by varying said second demodulation phase, this minimum being reached for a so-called additional second demodulation phase, and servo-control said element to a value of said parameter that makes it possible to maintain this intensity peak at said additional phase,

◦ determine, at said decoupling phase and at said zero difference, a value of said modulation phase for which said PL function is cancelled out, and servo-control said phase modulator (PM) in order to maintain the cancelling out of said PL function.

**6.** The device according to the preceding claim, wherein said element is said laser (L) and said parameter is a DC voltage $V_{dc,L}$ for supply to the laser.

**7.** The device according to claim 5, wherein the element is an acousto-optic modulator (AOM) configured to vary said optical frequency of the laser radiation before it is phase-modulated by said phase modulator, said parameter being an excitation frequency $f_{AOM}$ of said acousto-optic modulator.

**8.** The device according to claim 5, wherein the element is a piezoelectric translation stage to which a component of said cavity is fixed, said stage being adapted to vary a length of the cavity, said parameter being said length of the cavity.

**9.** The device according to one of claims 5 to 8, wherein the cavity (C) is a ring cavity comprising an optical fibre (FO) and first and second coupling means (M1, M2) configured to couple said radiation injected into said cavity with said optical fibre, the first and second coupling means comprising a mirror or a fibre coupler.

**10.** The device according to claim 9, comprising:

- an optical splitter (LS) adapted to split the laser radiation into a first and a second optical channel (F, F') so as to inject said laser radiation into the cavity in a first and a second direction,
- the first optical channel comprises the phase modulator (PM) and an optical circulator (CO) placed after the phase modulator,
- the second optical channel comprises an additional phase modulator (PM'), and an additional optical circulator (CO') placed after the additional phase modulator,
- said optical circulator (CO) and said additional optical circulator being adapted to direct the laser radiation injected respectively in said second direction and in said first direction and then reflected by the cavity (C) toward an additional reflection photodiode (PDr') and toward said photodiode (PDr),
- a first optical path of said first optical channel and an second optical path said second optical channel between the phase modulator and said cavity respectively, and the additional phase modulator and said cavity having a guided-optic configuration.

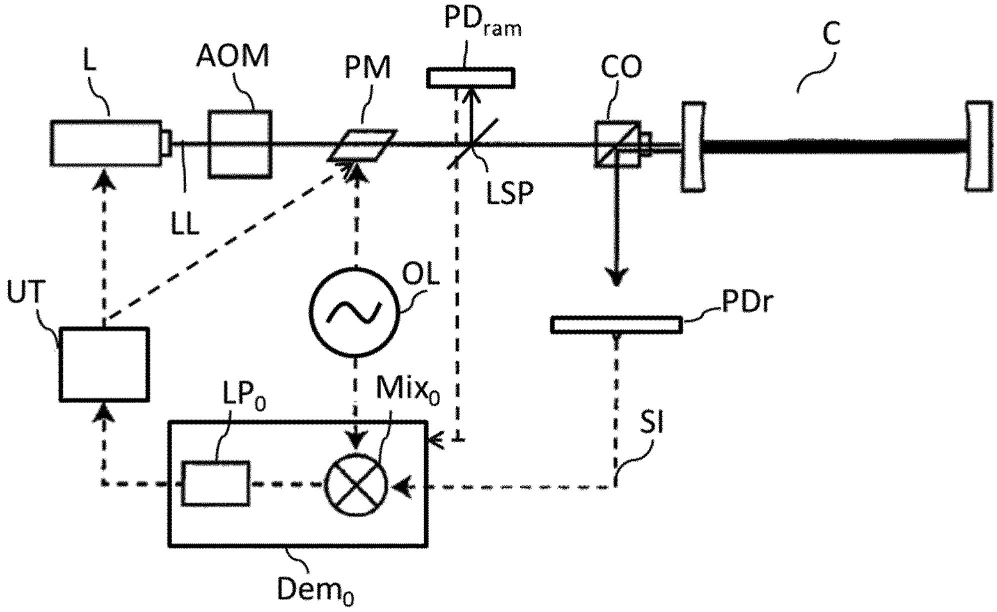


Figure 1

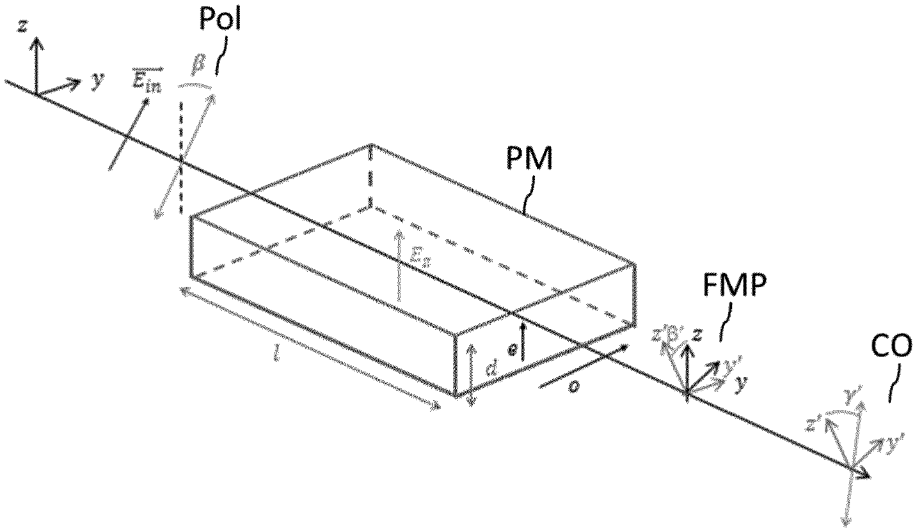


Figure 2

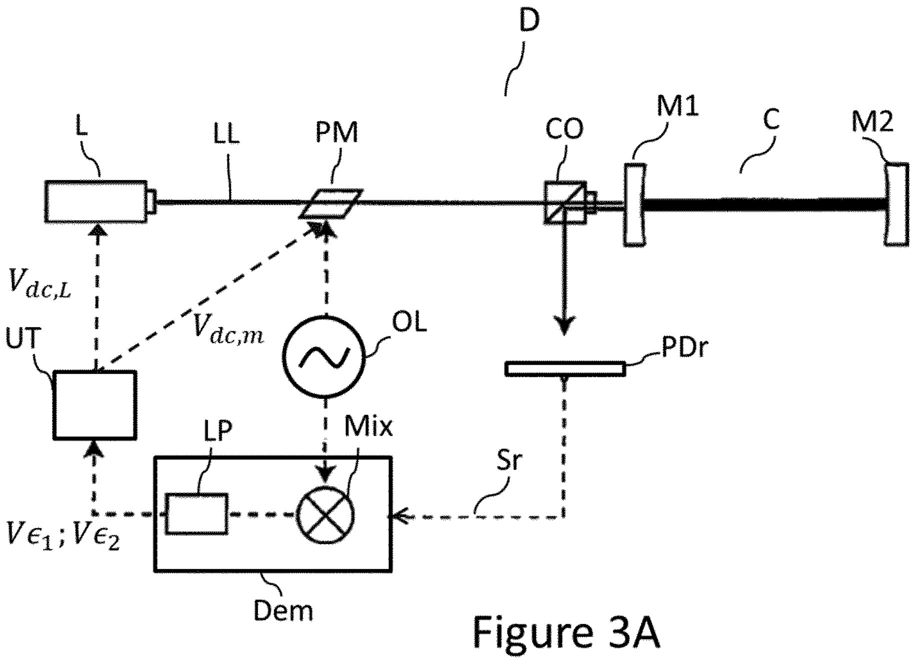


Figure 3A

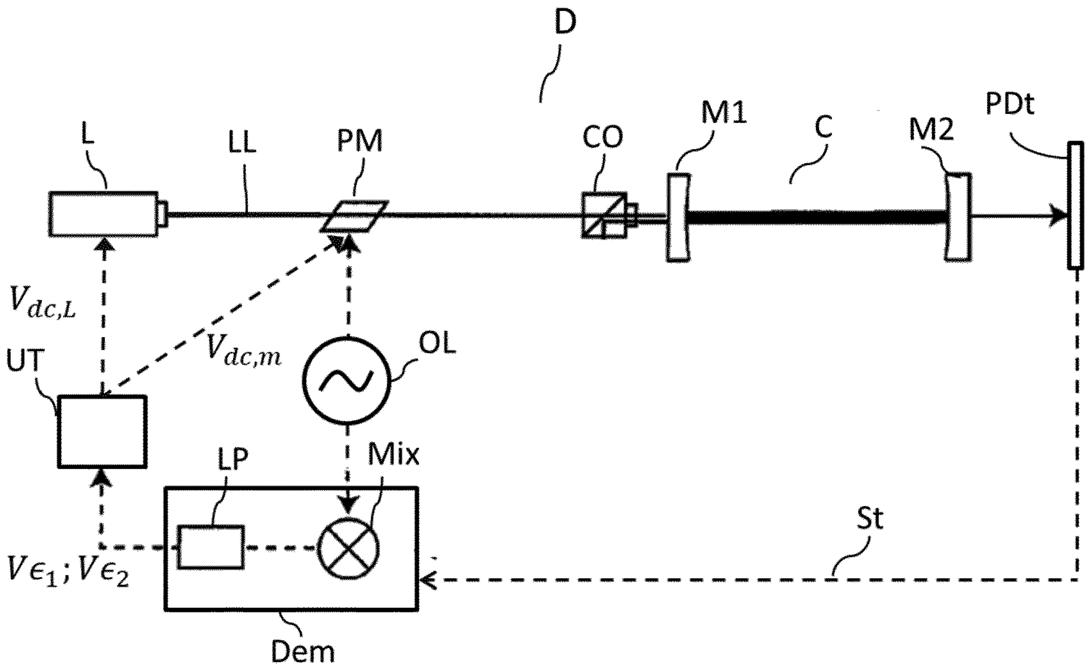


Figure 3B

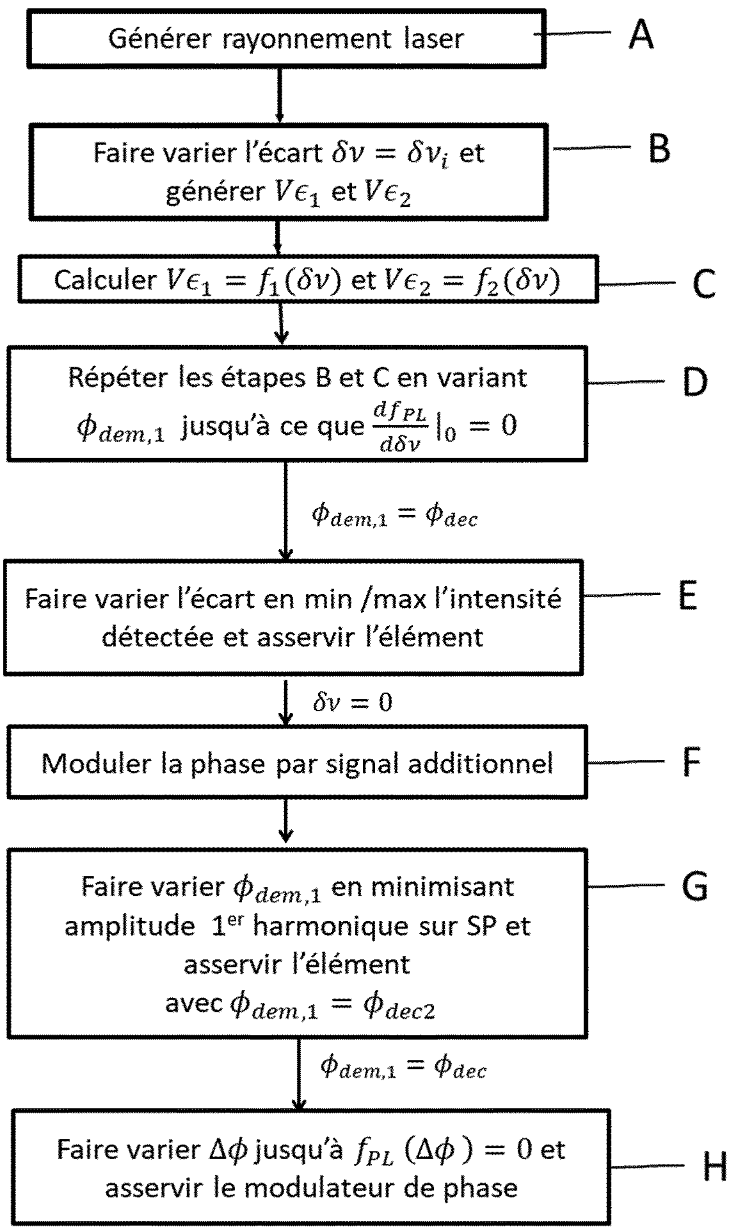
Générer rayonnement laser
A
Faire varier l'écart $\delta v = \delta v_i$ et générer $V\epsilon_1$ et $V\epsilon_2$
B
Calculer $V\epsilon_1 = f_1(\delta v)$ et $V\epsilon_2 = f_2(\delta v)$
C
Répéter les étapes B et C en variant $\phi_{dem,1}$ jusqu'à ce que $\frac{df_{PL}}{d\delta v}|_0 = 0$
D
$\phi_{dem,1} = \phi_{dec}$
Faire varier l'écart en min /max l'intensité détectée et asservir l'élément
E
$\delta v = 0$
Moduler la phase par signal additionnel
F
Faire varier $\phi_{dem,1}$ en minimisant amplitude 1er harmonique sur SP et asservir l'élément avec $\phi_{dem,1} = \phi_{dec2}$
G
$\phi_{dem,1} = \phi_{dec}$
Faire varier $\Delta\phi$ jusqu'à $f_{PL}$ $(\Delta\phi) = 0$ et asservir le modulateur de phase
H

Figure 4

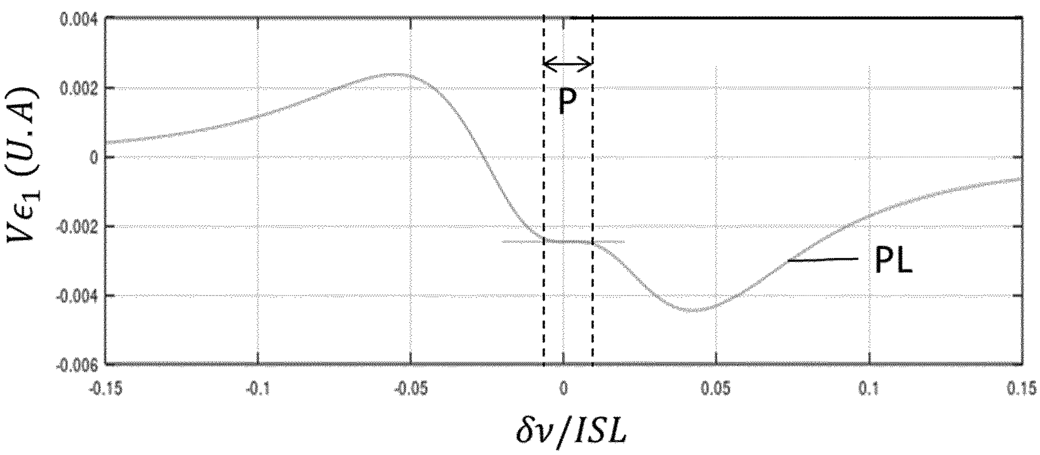


Figure 5A

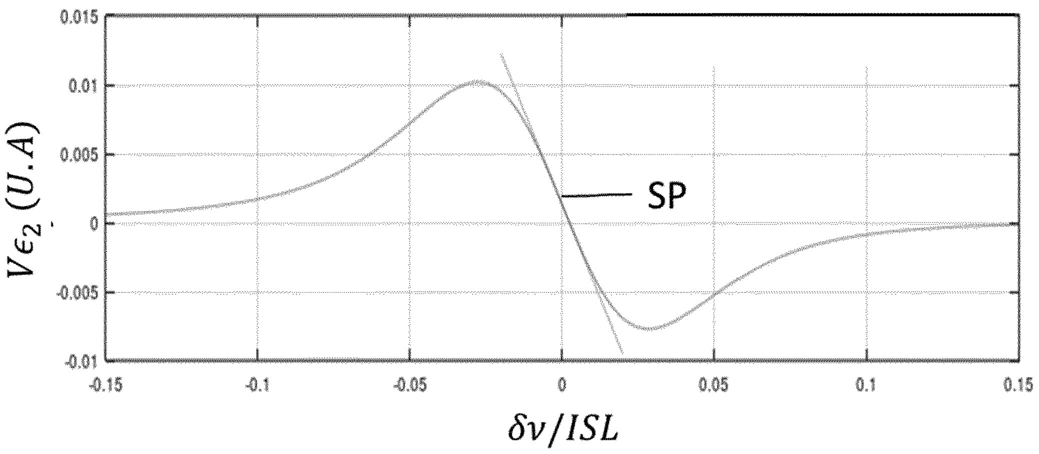


Figure 5B

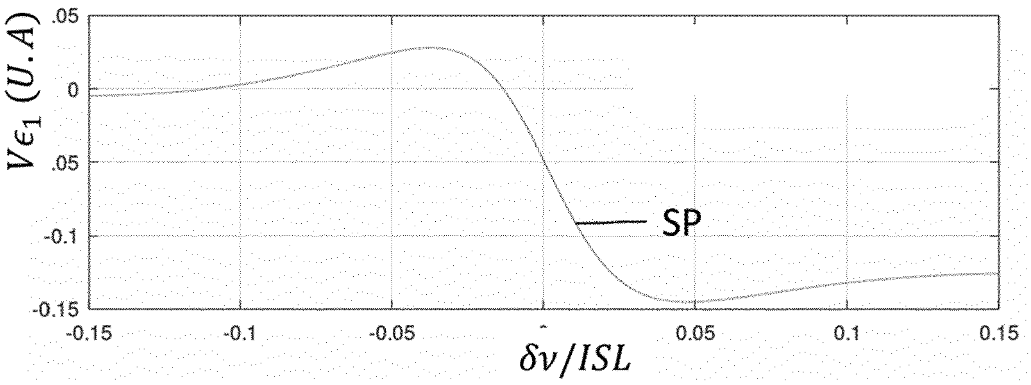


Figure 6A

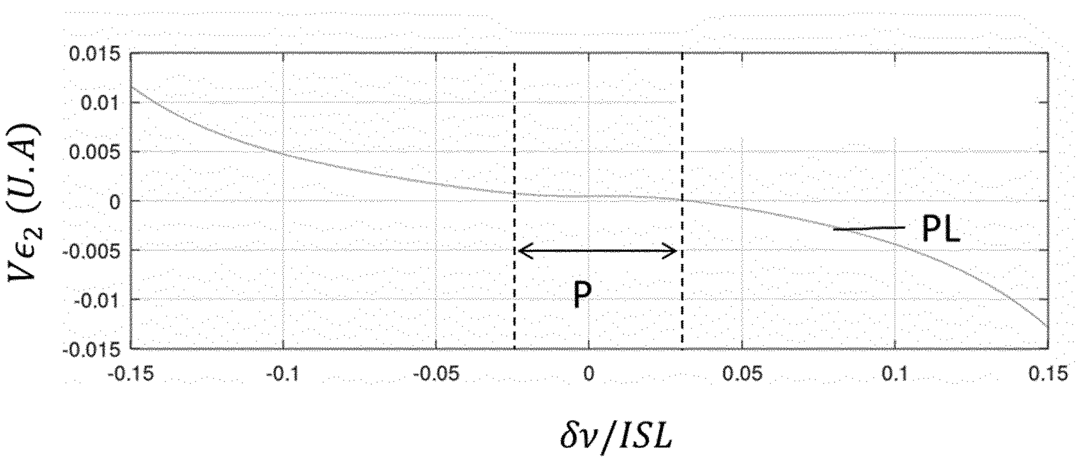


Figure 6B

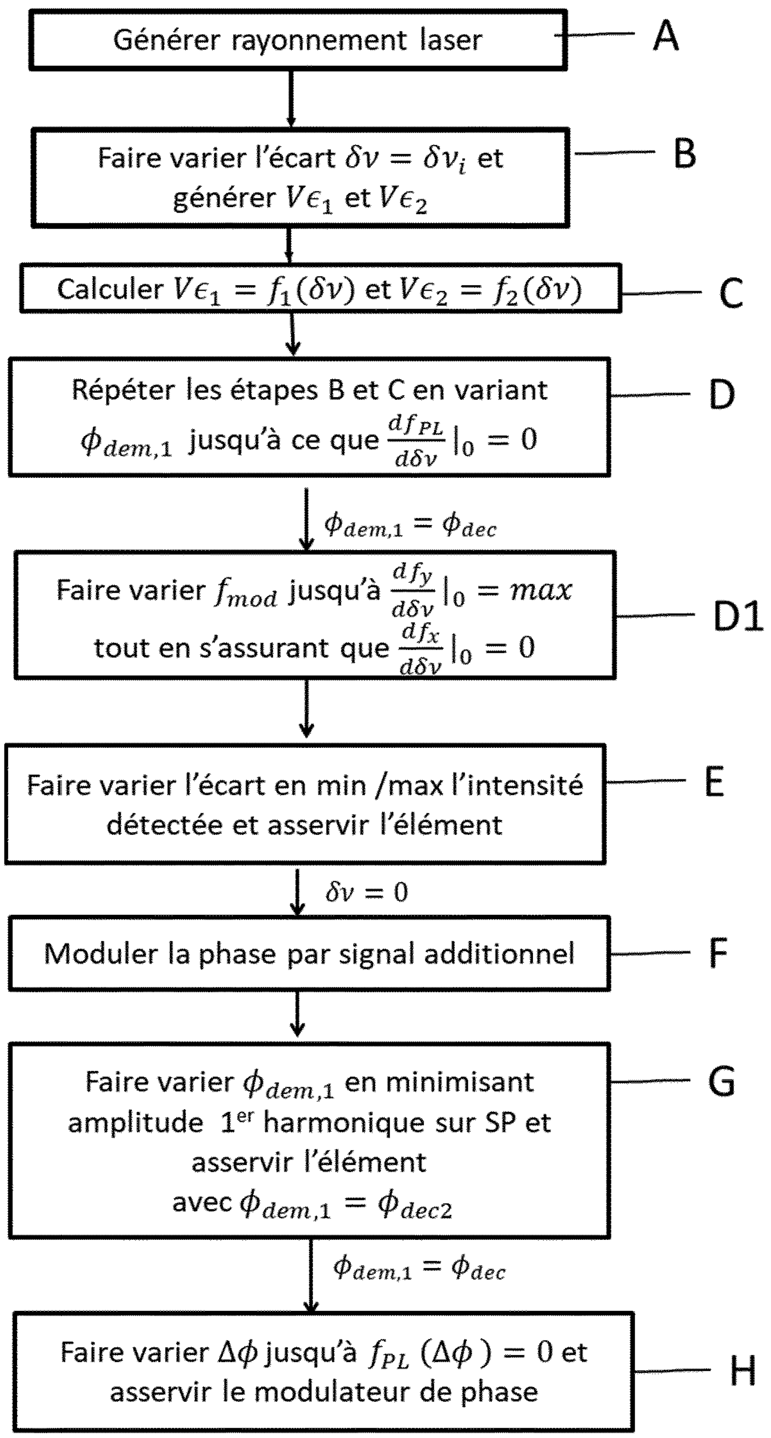
Générer rayonnement laser
A
Faire varier l'écart $\delta\nu = \delta\nu_i$ et générer $V\epsilon_1$ et $V\epsilon_2$
B
Calculer $V\epsilon_1 = f_1(\delta\nu)$ et $V\epsilon_2 = f_2(\delta\nu)$
C
Répéter les étapes B et C en variant $\phi_{dem,1}$ jusqu'à ce que $\frac{df_{PL}}{d\delta\nu}|_0 = 0$
D
$\phi_{dem,1} = \phi_{dec}$
Faire varier $f_{mod}$ jusqu'à $\frac{df_y}{d\delta\nu}|_0 = max$ tout en s'assurant que $\frac{df_x}{d\delta\nu}|_0 = 0$
D1
Faire varier l'écart en min /max l'intensité détectée et asservir l'élément
E
$\delta\nu = 0$
Moduler la phase par signal additionnel
F
Faire varier $\phi_{dem,1}$ en minimisant amplitude 1er harmonique sur SP et asservir l'élément avec $\phi_{dem,1} = \phi_{dec2}$
G
$\phi_{dem,1} = \phi_{dec}$
Faire varier $\Delta\phi$ jusqu'à $f_{PL}$ $(\Delta\phi) = 0$ et asservir le modulateur de phase
H

Figure 7

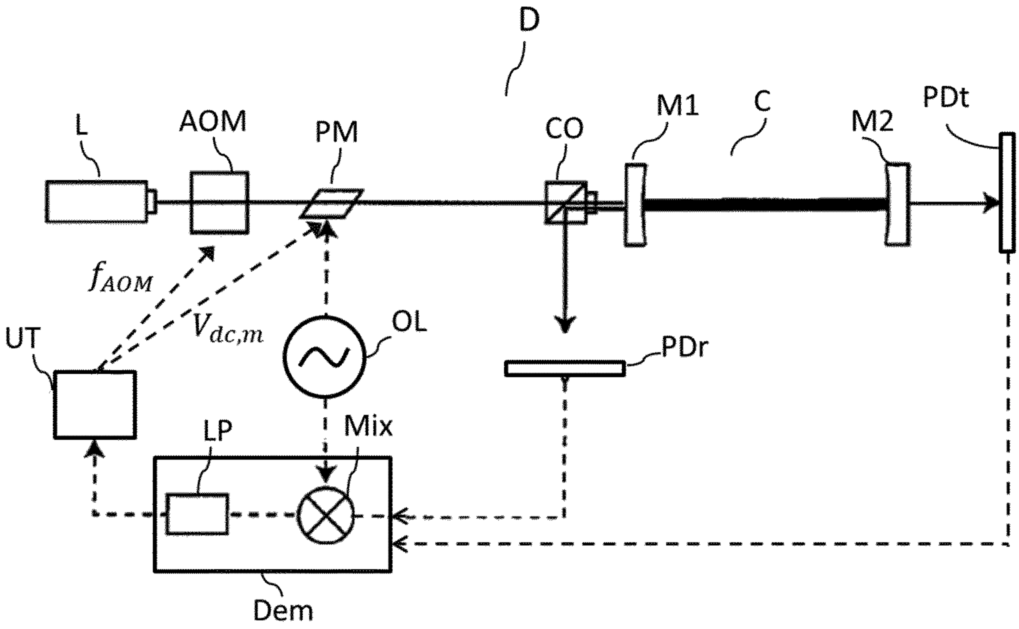


Figure 8

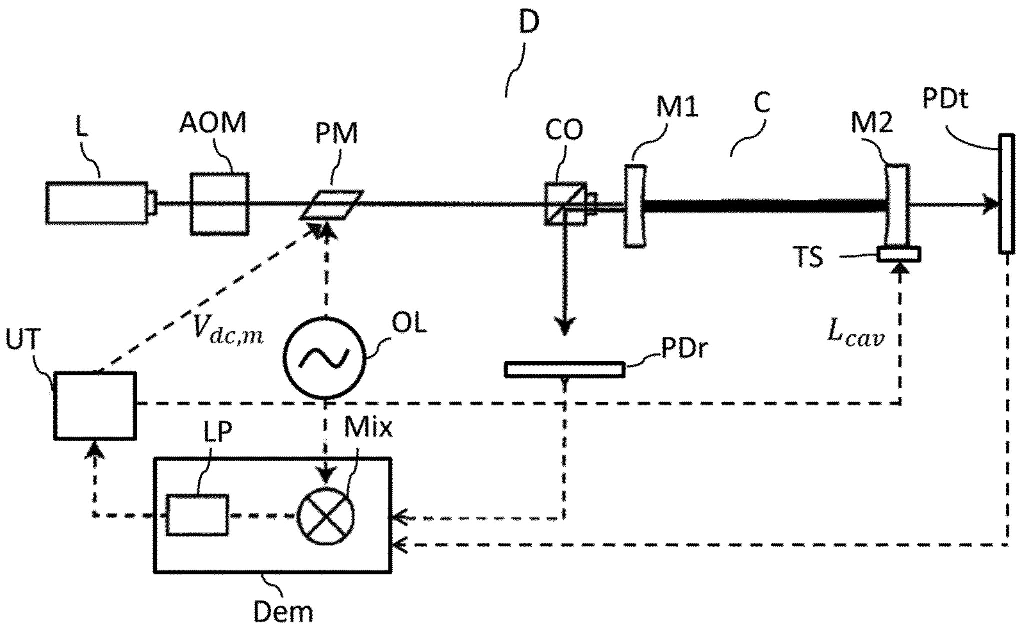


Figure 9

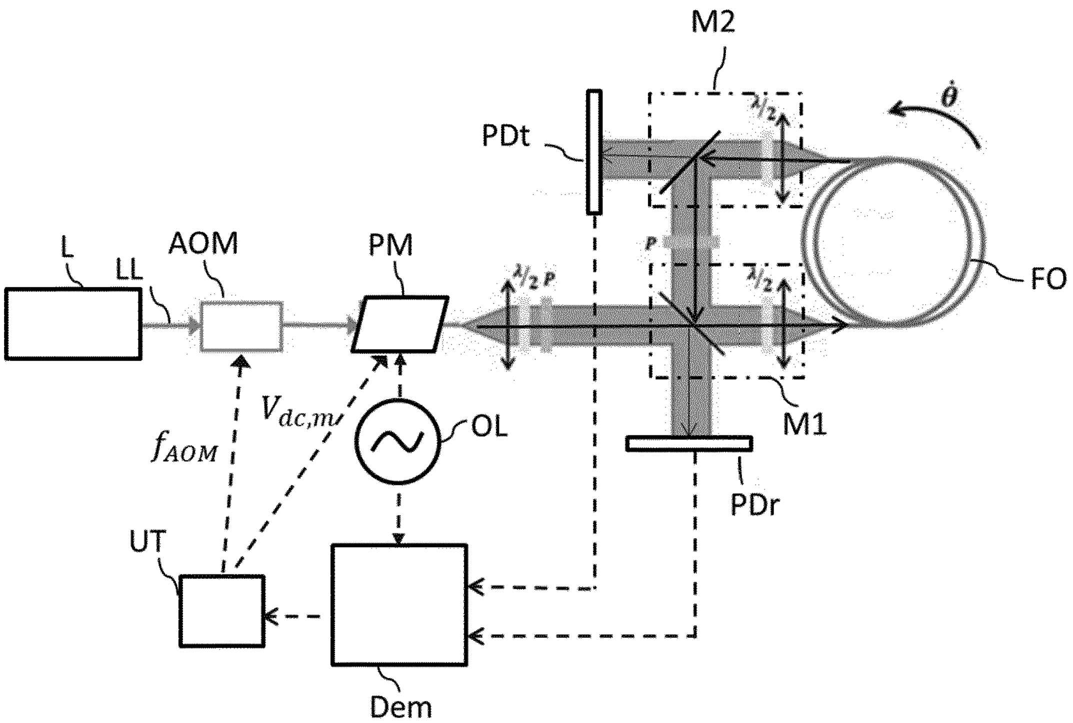
M2
PDt
$\dot{\theta}$
$\lambda/2$
P
$\lambda/2$
L
LL
AOM
PM
$\lambda/2$ P
FO
$V_{dc,m}$
$f_{AOM}$
OL
M1
PDr
UT
Dem

Figure 10

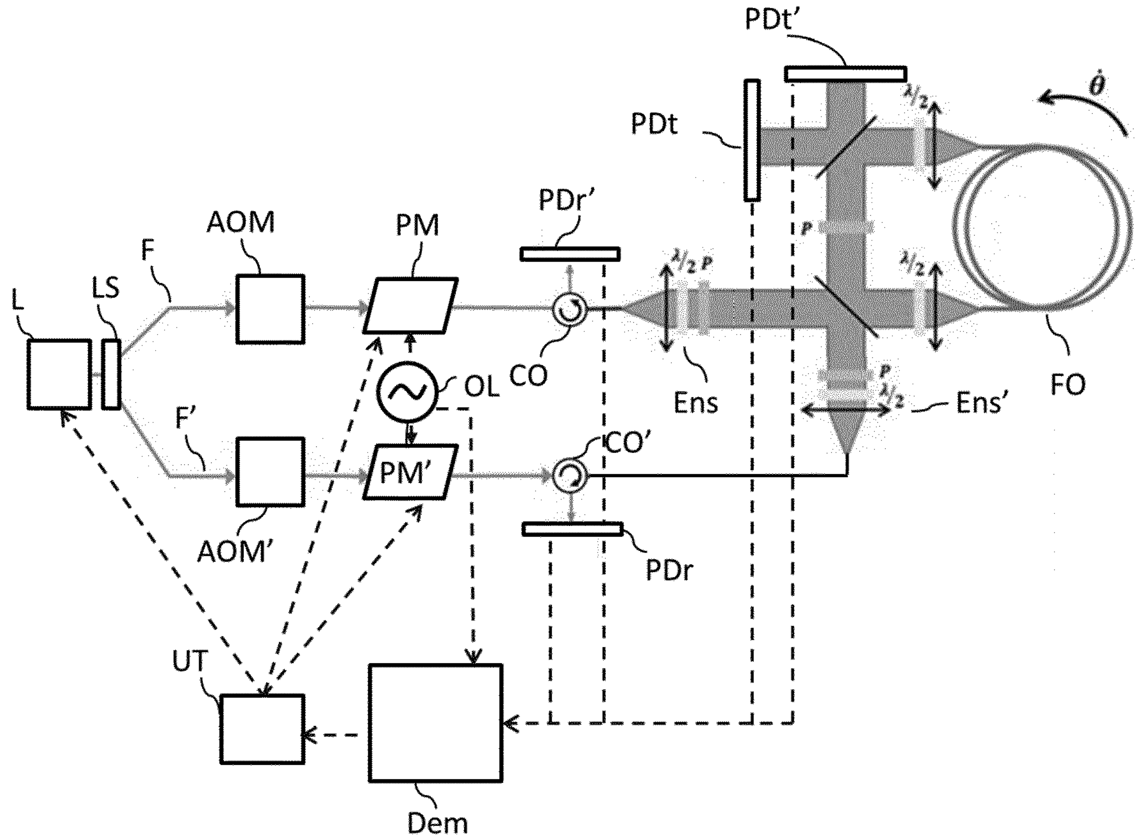


Figure 11

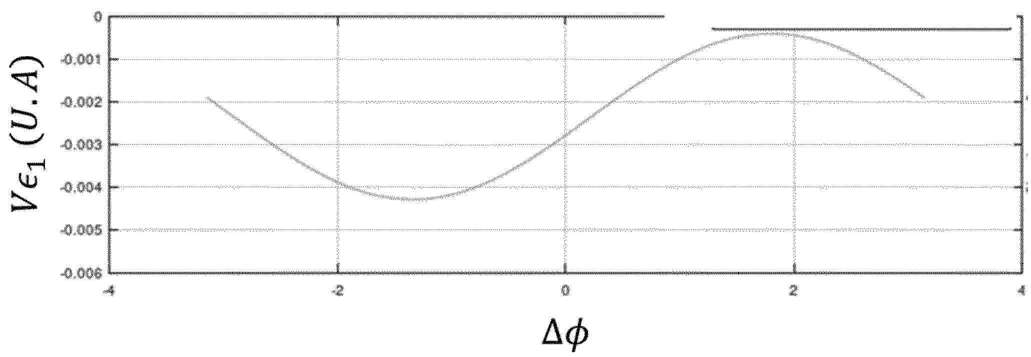


Figure 12A

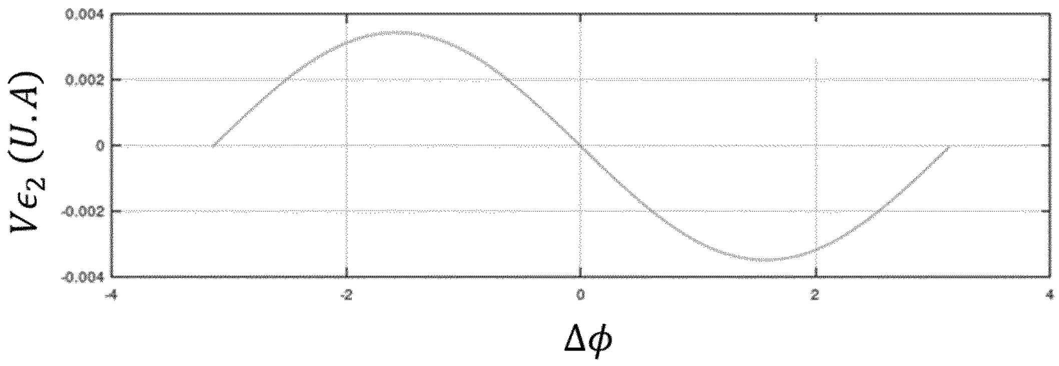


Figure 12B

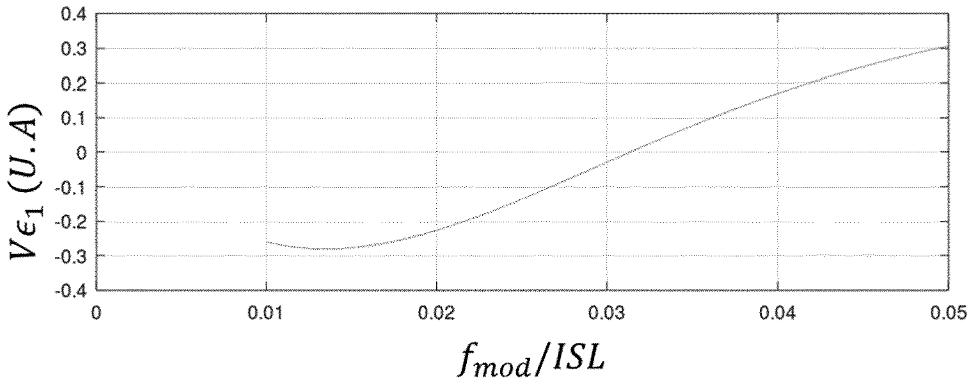


Figure 13A

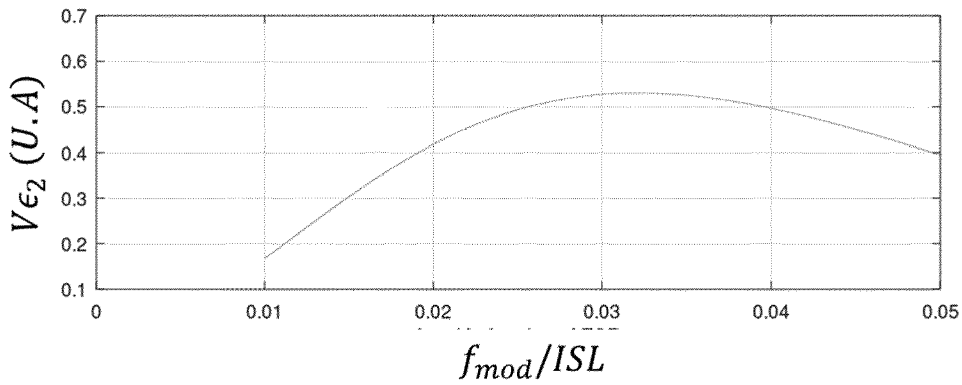


Figure 13B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **R. W. P. DREVER**. Laser Phase and Frequency Stabilization Using an Optical Resonator. *Appl. Phys. B*, 1983, vol. 31, 97-105
- Suppression of residual amplitude modulation of ADP electro-optical modulator. *Pound-Drever-Hall laser frequency stabilization*, ISSN 0030-3992